# EUROPEAN PATENT SPECIFICATION

(11) **EP 3 208 437 B1**
(45) Date of publication and mention of the grant of the patent: **29.08.2018**
(21) Application number: 17156099.8
(22) Date of filing: 14.02.2017
(51) Int. Cl.: F01N 3/20

(54) **EXHAUST GAS CONTROL APPARATUS FOR INTERNAL COMBUSTION ENGINE**
ABGASREINIGUNGSVORRICHTUNG FÜR EINEN VERBRENNUNGSMOTOR
APPAREIL DE PURIFICATION DE GAZ D'ÉCHAPPEMENT POUR MOTEUR À COMBUSTION INTERNE

(30) Priority: 17.02.2016 JP 2016027778
(43) Date of publication of application: 23.08.2017
(73) Proprietor: TOYOTA JIDOSHA KABUSHIKI KAISHA, Toyota-Shi, Aichi-Ken 471-8571 (JP)
(72) Inventor: SAITOH, Hirotaka, Aichi-ken, 471-8571 (JP); TSUKAMOTO, Yoshihisa, Aichi-ken, 471-8571 (JP); HAGIMOTO, Yuriko, Aichi-ken, 471-8571 (JP); MATSUO, Junichi, Aichi-ken, 471-8571 (JP); NOTAKE, Yasumasa, Aichi-ken, 471-8571 (JP)
(74) Representative: J A Kemp

(56) References cited:
- WO-A1-2015/021644
- JP-A- 2008 101 564
- US-A1- 2013 213 014

## Description

### BACKGROUND OF THE INVENTION

### 1. Field of the Invention

The present invention relates to an exhaust gas control apparatus for an internal combustion engine.

### 2. Description of Related Art

There is known a selective reduction-type NOx (nitrogen oxides) catalyst (which is hereinafter also simply referred to as "SCR catalyst") that purifies NOx contained in exhaust gas of an internal combustion engine with ammonia as a reducing agent. A filter that catches particulate matter (hereinafter referred to as PM) in the exhaust gas is known to carry the SCR catalyst. On an upstream side of the SCR catalyst, an addition valve may be disposed to supply urea water into the exhaust gas. The urea water added to the exhaust gas is hydrolyzed by heat of the exhaust gas or heat of the SCR catalyst to generate ammonia, and the ammonia is adsorbed by the SCR catalyst.

Urea water is frozen at about -11°C, for example. Therefore, when ambient temperature is low, urea water may possibly freeze in the addition valve or in a urea water supply passage after the internal combustion engine is stopped. When the urea water freezes, there are possibilities that the urea water cannot be added after the start of the internal combustion engine, or the addition valve and the urea water supply passage are damaged. After the stop of the internal combustion engine, the temperature of the addition valve temporarily becomes higher than the temperature during operation of the internal combustion engine due to the heat that the addition valve receives from the exhaust gas and from peripheral component members. In this case, if the urea water exists inside the addition valve, deposits may be formed from the urea water in the addition valve, and the deposits may cause wear of a sliding portion in the addition valve and may cause clogging of the addition valve. Furthermore, due to the temperature increase in the addition valve after the stop of the internal combustion engine, urea may be hydrolyzed within the addition valve to generate ammonia. The ammonia may corrode the addition valve.

Accordingly, after the stop of the internal combustion engine, the urea water in the addition valve and in the urea water supply passage is sucked back to a tank (see, for example, Japanese Patent Application Publication No. 2008-101564).

US 2013/0213014 discloses a reducing agent injection valve abnormality detection unit capable of precisely determining whether or not a reducing agent injection valve is abnormally stuck, and a reducing agent supply apparatus. The reducing agent injection valve abnormality detection unit includes: a reducing agent collection control means for, when an instruction for opening the reducing agent injection valve has been issued, performing control so that the reducing agent in the reducing spent passage is collected into the storage tank; a reducing agent filling control means for, when an instruction for closing the reducing agent injection valve has been issued after the control for collecting the reducing agent, performing control so that the reducing agent passage is refilled with the reducing agent; and an abnormality determination means for determining whether or not the reducing agent injection valve is abnormally stuck, based on change in the pressure in the reducing agent passage during the control for refilling with the reducing agent.

### SUMMARY OF THE INVENTION

When urea water is sucked back to the tank by making the urea water flow backward, the addition valve is opened and the exhaust gas of the internal combustion engine flows into the addition valve through an exhaust passage. That is, in the addition valve and the urea water passage, the urea water is replaced with exhaust gas of the internal combustion engine. Here, in the case where the exhaust gas around the addition valve contains PM, the PM in the exhaust gas is easily sucked into the addition value together with the exhaust gas in the exhaust passage when the urea water is sucked back to the tank immediately after the stop of the internal combustion engine. Even in the case where the urea water in the addition valve is sucked back, the urea water, though small in amount, still remains in the addition valve since it is difficult to completely suck the urea water back from places such as gaps in the sliding portion in the addition valve. Since the temperature of the exhaust gas in the exhaust passage is still high at the time immediately after the stop of the internal combustion engine, sucking the high-temperature exhaust gas increases the temperature of the addition valve. Therefore, when the urea water is sucked back immediately after the stop of the internal combustion engine, the temperature of the addition valve increases, which causes increase in the temperature of the urea water remaining in places such as the sliding portion of the addition valve. As a result, PM can be mixed into the high-temperature urea water. Here, it has been found out that under high temperature and the existence of urea water, agglomeration of PM is promoted by urea water and easily causes clogging of the addition valve or wear of the sliding portion of the addition valve. It is considered that the particle size of PM is increased by the urea water, and the particle size of deposits caused by urea is increased by PM. Based on this consideration, both the PM and the deposits are regarded as a mixture of the deposits and the PM caused by urea. Therefore, in the following description, both the PM and the deposits are simply described as deposits.

Furthermore, when the temperature of the addition valve is increased by sucking the high-temperature exhaust gas into the addition valve, deposits are formed due to the urea water remaining in the addition valve. It has also been found out that when deposits are formed under the existence of PM, the deposits are agglomerated by the PM and the particle size of the deposits becomes larger. Furthermore, some of the deposits from the urea water are hardly soluble in water. When such deposits that are hardly soluble in water are formed in the addition valve, and the particle size of the deposits becomes larger than the diameter of a nozzle hole, it becomes difficult to remove the deposits out of the addition valve since the deposits do not solve even when urea water is passed through the addition valve afterward. Accordingly, the deposits may possibly cause wear in the addition valve or clogging of the addition valve. When a filter is not provided in the exhaust passage on the upstream side of the addition valve, a larger amount of PM is sucked through the addition valve, and increase in the particle size of the deposits becomes more notable. Even when the filter is provided on the upstream side of the addition valve, it is still difficult to catch all the PM with the filter. Furthermore, deposits can still be formed inside the addition valve by sucking high-temperature exhaust gas into the addition valve. Thus, even when the urea water is sucked back to the tank, the urea water remaining in the addition valve and the PM sucked into the addition valve can cause increase in the particle size of the deposits. As a result, wear in the addition valve or clogging of the addition valve may occur.

The present invention provides an exhaust gas control apparatus for an internal combustion engine that suppresses wear in an addition valve or clogging of the addition valve that are caused by increase in the particle size of deposits.

An exhaust gas control apparatus for an internal combustion engine according to one aspect of the present invention is defined in appended claim 1.

In the exhaust gas control apparatus according to the aspect, addition of the urea water from the addition valve is stopped after the internal combustion engine is stopped. Accordingly, the heat to be taken away from the addition valve by the urea water is decreased. Moreover, since heat moves from the exhaust gas and the exhaust passage to the addition valve, the temperature of the addition valve tends to increase. Then, the temperature of a front end portion of the addition valve exposed to the exhaust gas of the internal combustion engine becomes highest among portions of the addition valve. To cope with the temperature increase, the first control is executed after the stop of the internal combustion engine to return a specified amount of urea water in the addition valve and the urea water passage to the tank side, so that the urea water can be kept away from the front end portion of the addition valve having the highest temperature. Accordingly, since the increase in temperature of the urea water can be suppressed, a formation amount of the deposits can be reduced. Furthermore, it becomes possible to suppress generation of ammonia from urea water inside the addition valve. That is, the specified amount used herein is set as the amount of sucked-back urea water that can suppress formation of deposits and generation of ammonia from the urea water. In the first control, all the urea water in the addition valve and the urea water passage may be returned to the tank, or some of the urea water in the addition valve and the urea water passage may be returned to the tank.

However, after the first control is executed, deposits may still be formed from the urea water that remains in places such as the sliding portion inside the addition valve. When PM flows into the addition valve at the time of executing the first control, the particle size of the deposits tends to become larger. Therefore, the particle size of the deposits may become larger beyond an allowable range. To cope with the increase in the particle size, the second control is executed after the first control is executed to discharge the specified amount or more of urea water from the tank. Accordingly, the amount of urea water equal to or more than the amount of the urea water returned to the tank in the first control is discharged toward the addition valve from the tank. As a result, the urea water washes out the deposits to the exhaust passage. That is, before the particle size of the deposits becomes larger beyond the allowable range, the deposits can be discharged to the exhaust passage. When the second control is executed, the urea water circulates to the addition valve such that the urea water takes away heat from the addition valve. As a result, the temperature of the addition valve can be lowered. This makes it possible to suppress formation of deposits from the urea water that remains in places such as the sliding portion inside the addition valve even with the third control being executed. It also becomes possible to suppress increase in the particle size of deposits if the deposits are formed. Thus, wear in the addition valve or clogging of the addition valve caused by increase in the particle size of deposits can be suppressed.

In the exhaust gas control apparatus according to the aspect, the specified amount in the first control may be smaller than a capacity of the addition valve and the urea water passage. That is, while all the urea water in the addition valve and the urea water passage is returned to the tank in the third control, some of the urea water in the addition valve and the urea water passage may be returned to the tank in the first control.

In the exhaust gas control apparatus according to the aspect, high-temperature exhaust gas may be sucked into the addition valve by executing the first control. Accordingly, the temperature of the addition valve may increase. Furthermore, PM may also be sucked into the addition valve due to the first control. As described before, under high temperature and existence of PM, the particle size of deposits tends to become larger. Accordingly, in order to suppress increase in the particle size of deposits, the amount of PM sucked into the addition valve in the first control may be reduced. That is, the amount of urea water sucked back in the first control may be reduced. Here, the amount of urea water returning to the tank is made smaller in the first control than in the third control, so that the amount of exhaust gas of the internal combustion engine that flows into the addition valve through the exhaust passage becomes restrictive in the first control. As a result, the amount of PM flowing into the addition valve can be reduced. Therefore, executing the first control makes it possible to suppress generation of ammonia inside the addition valve, while suppressing increase in the particle size of the deposits.

In the exhaust gas control apparatus according to the aspect, the addition valve or the urea water passage may include a radiator configured to radiate heat from the addition valve or the urea water passage. When the radiator is included, the specified amount in the first control may be equal to or more than a capacity of a portion extending from a front end of the addition valve to an end portion of the radiator on a tank side.

According to the exhaust gas control apparatus in the aspect, the heat received from the front end side of the addition valve is transferred toward the radiator and is then radiated by the radiator. Accordingly, a region extending from the radiator to an exhaust passage side is high in temperature, while a region closer to the tank than the radiator is lower in temperature than the region extending from the radiator to the exhaust passage side. Therefore, in the first control, at least an amount of the urea water corresponding to the capacity of a portion extending from the front end of the addition valve to the end portion of the radiator on the tank side may be sucked back to the tank, so that the urea water can be kept away from the region having relatively high temperature. Accordingly, since the increase in the temperature of the urea water can be suppressed, generation of ammonia and formation of deposits can be suppressed. Since the amount of sucked-back urea water becomes restrictive in the first control, the amount of PM sucked into the addition valve can be reduced. As a result, it becomes possible to suppress increase in the particle size of the deposits caused by the urea water remaining in places such as gaps in the addition valve.

In the exhaust gas control apparatus according to the aspect, the urea water passage may be higher in resistance against corrosion by ammonia than the addition valve. In this case, the specified amount in the first control may be the capacity of the addition valve.

In the exhaust gas control apparatus according to the aspect, at least an amount of urea water corresponding to the capacity of the addition valve is returned to the tank, so that the urea water can be kept away from the region of the addition valve having relatively high temperature. Even if ammonia is generated, generation of ammonia occurs in the urea water passage with high resistance against corrosion by ammonia. As a result, it becomes possible to suppress corrosion of the addition valve and to suppress corrosion of the urea water passage by ammonia. Since the amount of sucked-back urea water becomes restrictive in the first control, the amount of PM sucked into the addition valve can be reduced. As a result, it becomes possible to suppress increase in the particle size of the deposits caused by the urea water remaining in places such as gaps in the addition valve.

In the exhaust gas control apparatus according to the aspect, the electronic control unit may be configured to execute the first control, the second control, and the third control when a temperature of exhaust gas at time of stopping the internal combustion engine is equal to or more than a predetermined temperature. The electronic control unit may be configured to control the pump, as fourth control, such that all the urea water stored in the addition valve and the urea water passage returns to the tank without executing the first control, the second control, and the third control, when the temperature of the exhaust gas at the time of stopping the internal combustion engine is less than the predetermined temperature.

Depending on the operating state before the stop of the internal combustion engine, the exhaust gas temperature at the time of stopping the internal combustion engine may be too low to cause increase in the particle size of deposits. In such a case, the particle size of the deposits is hardly increased by the urea water that still remains in places such as gaps in the addition valve even after all the urea water is sucked back to the tank immediately after the stop of the internal combustion engine. Therefore, it is not necessary to suck the urea water back to the tank and then discharge the sucked-back urea water from the tank so as to discharge the deposits from the addition valve to the exhaust passage. That is, the control of returning all the urea water in the addition valve and the urea water passage to the tank may be executed only once to suppress freezing of the urea water. In the exhaust gas control apparatus according to the aspect, when the exhaust gas temperature at the time of stopping the internal combustion engine is less than the predetermined temperature, it becomes unnecessary to suck the urea water back to the tank and then discharge the sucked-back urea water from the tank and to suck the urea water back again to the tank. As a result, it becomes possible to reduce power consumption in the pump and the control device. The predetermined temperature is an exhaust gas temperature at the time of stopping the engine assuming that the first control is executed, the exhaust gas temperature having a possibility of causing increase in the particle size of deposits beyond the allowable range. The allowable range of the particle size of the deposits is determined in consideration of wear of the addition valve and clogging of the addition valve. For example, when the particle size of the deposits becomes larger than the diameter of a nozzle hole of the addition valve, clogging of the addition valve occurs. Accordingly, the allowable range of the particle size of the deposits is set to a value that is smaller than the diameter of the nozzle hole of the addition valve so as not to cause clogging of the addition valve.

In the exhaust gas control apparatus according to the aspect, the electronic control unit may be configured to make a period from time of ending the first control to time of starting the second control shorter and make a period from time of ending the second control to time of starting the third control longer as the temperature of the exhaust gas at the time of stopping the internal combustion engine is higher.

More specifically, the time of ending the first control may not coincide with the time of starting the second control. The period from the time of ending the first control to the time of starting the second control may be changed based on the temperature of exhaust gas at the time of stopping the internal combustion engine. Similarly, time of ending the second control may not coincide with time of starting the third control. The period from the time of ending the second control to the time of starting the third control may be changed based on the temperature of the exhaust gas at the time of stopping the internal combustion engine. Here, when the time of ending the first control does not coincide with the time of starting the second control, and the temperature of the exhaust gas at the time of ending the first control is high, then the particle size of deposits tends to increase after the time of ending the first control. Therefore, since the particle size of the deposits exceeds the allowable range soon after the first control is ended, it is preferable to start the second control earlier. In the exhaust gas control apparatus according to the aspect, the second control is started earlier, so that the deposits can be discharged from the addition valve before the particle size of the deposits exceed the allowable range. Here, the temperature of the exhaust gas at the time of stopping the internal combustion engine relates to subsequent temperature of the exhaust gas. As the temperature of the exhaust gas at the time of stopping the internal combustion engine is higher, the temperature of the exhaust gas at the time of ending the first control becomes higher. That is, as the temperature of the exhaust gas at the time of stopping the internal combustion engine is higher, the particle size of the deposits tends to increase after the end of the first control. Therefore, it becomes possible to suppress increase in the particle size of the deposits beyond the allowable range by making the period from the time of ending the first control to the time of starting the second control shorter as the temperature of the exhaust gas at the time of stopping the internal combustion engine is higher.

Meanwhile, when the third control is started while the temperature of the exhaust gas is high, the temperature of the addition valve may increase to cause formation of deposits and to further cause increase in the particle size of the deposits. In this case, as the period from the time of ending the second control to the time of starting the third control is made longer, the amount of heat radiated from the exhaust passage to the outside air increases, and thereby the temperature of the exhaust gas is lowered. Here, as described in the foregoing, the temperature of the exhaust gas at the time of stopping the internal combustion engine is related to subsequent temperature of the exhaust gas. As the temperature of the exhaust gas at the time of stopping the internal combustion engine is higher, the temperature of the exhaust gas at the time of ending the second control becomes higher. That is, as the temperature of the exhaust gas at the time of stopping the internal combustion engine is higher, the particle size of the deposits tends to increase when the third control is executed early. Therefore, it becomes possible to adequately lower the temperature of the exhaust gas at the time of starting the third control by making the period from the time of ending the second control to the time of starting the third control longer as the temperature of the exhaust gas at the time of stopping the internal combustion engine is higher. This makes it possible to more reliably suppress formation of deposits and increase in the particle size of the deposits.

In the exhaust gas control apparatus according to the aspect, the electronic control unit may be configured to control the pump, as the second control, such that the specified amount or more of the urea water in the tank is discharged to the urea water passage and that the temperature of the exhaust gas becomes lower than an allowable temperature.

In the exhaust gas control apparatus according to the aspect, when the second control is executed, the urea water passes the addition valve so that the urea water takes away heat from the addition valve. As a consequence, the temperature of the addition valve is lowered. The temperature of the exhaust gas is also lowered by injection of the urea water to the exhaust gas. Therefore, the temperature of the exhaust gas can swiftly be decreased by continuing the second control. When the second control is continued until the temperature of the exhaust gas becomes lower than the allowable temperature, formation of deposits and increase in the particle size of the deposits can more reliably be suppressed even with the third control being executed afterward. The allowable temperature is a temperature of the exhaust gas at which the particle size of the deposits falls within an allowable range even with the third control being executed.

According to the present invention, wear in the addition valve or clogging of the addition valve caused by increase in the particle size of deposits can be suppressed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 illustrates a schematic configuration of an exhaust system of an internal combustion engine according to an embodiment;
FIG. 2 illustrates a result of examination performed by mixing PM into urea water to examine how the particle size of the PM changes with a difference in PM concentration;
FIG. 3 illustrates a result of examination performed by mixing PM into urea water to examine how the particle size of the PM changes with a difference in temperature;
FIG. 4 is a timechart in the case of executing suck-back control only once immediately after the stop of the internal combustion engine;
FIG. 5 is a timechart in the case of executing first control, second control, and third control according to a first embodiment;
FIG. 6 is a flowchart illustrating flows of the first control, the second control, and the third control according to the first embodiment;
FIG. 7 illustrates transition of the particle size of the deposits at each temperature;
FIG. 8 is a flowchart illustrating flows of the first control, the second control, the third control, and fourth control according to a second embodiment;
FIG. 9 is a timechart in the case of executing the first control, the second control, and the third control according to a third embodiment;
FIG. 10 is a flowchart illustrating flows of the first control, the second control, and the third control according to the third embodiment;
FIG. 11 is a timechart in the case of executing the first control, the second control, and the third control according to a fourth embodiment;
FIG. 12 is a flowchart illustrating flows of the first control, the second control, and the third control according to the fourth embodiment;
FIG. 13 is a sectional view of an addition valve and an exhaust passage around the addition value according to a fifth embodiment;
FIG. 14 illustrates relation between distance from a front end of the addition valve and temperature;
FIG. 15 is a flowchart illustrating flows of the first control, the second control, and the third control according to the fifth embodiment;
FIG. 16 is a timechart in the case of executing the first control, the second control, and the third control according to a sixth embodiment; and
FIG. 17 is a flowchart illustrating flows of the first control, the second control, and the third control according to the sixth embodiment;

### DETAILED DESCRIPTION OF EMBODIMENTS

The modes of carrying out the present invention will exemplarily be described below in detail with reference to the drawings. It is to be noted that sizes, materials, shapes, and relative arrangements of component members disclosed in the embodiments are not intended to restrict the scope of the present invention thereto unless otherwise specified. The embodiments disclosed below may be combined to the extent possible.

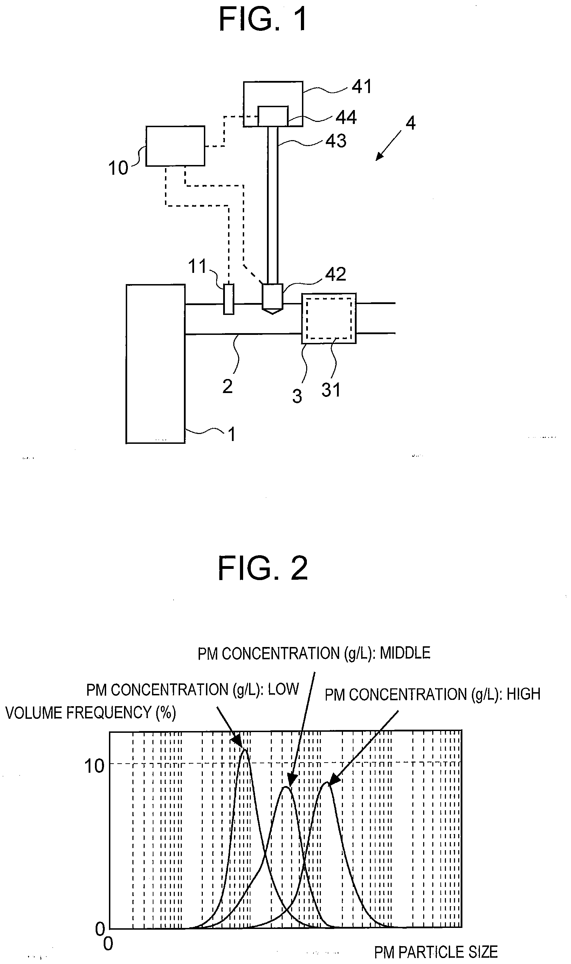

<First Embodiment> FIG. 1 illustrates a schematic configuration of an exhaust system of an internal combustion engine according to the present embodiment. An internal combustion engine 1 is a vehicle driving diesel engine. Without being limited to the diesel engine, the internal combustion engine 1 according to the present embodiment may be a gasoline engine and the like.

The internal combustion engine 1 is connected, to an exhaust passage 2. The exhaust passage 2 is equipped with a filter 3 that carries a selective reduction-type NOx catalyst 31 (hereinafter referred to as "SCR catalyst 31") that selectively reduces NOx in exhaust gas with ammonia as a reducing agent. The filter 3 is a wall flow-type filter that catches PM in the exhaust gas. The SCR catalyst 31 adsorbs ammonia and reduces NOx in the exhaust gas with the ammonia as a reducing agent. Although the filter 3 carries the SCR catalyst 31 in the present embodiment, only the SCR catalyst 31 may be provided as the filter 3 is not essential.

The exhaust passage 2 on the upstream side of the SCR catalyst 31 has an addition valve 42 provided to supply the reducing agent to the SCR catalyst 31. The addition valve 42 is a component member of a reducing agent feeder 4. The reducing agent feeder 4 includes a tank 41, the addition valve 42, a urea water passage 43, and a pump 44.

The tank 41 stores urea water. The addition valve 42 is attached to a portion of the exhaust passage 2 on the upstream side of the SCR catalyst 31. The urea water passage 43 connects the tank 41 and the addition valve 42 to circulate the urea water.

The pump 44 is provided inside the tank 41 to discharge the urea water. The pump 44 discharges the urea water from the tank 41 side to the addition valve 42 side during normal rotation, while discharging the urea water from the addition valve 42 side to the tank 41 side during reverse rotation. The pump 44 may be provided in the urea water passage 43 instead of in the tank 41. The pump 44 is an electric pump that rotates with supplied electric power. Therefore, the pump 44 can operate while the internal combustion engine 1 is stopped. When the pump 44 is normally rotated and the addition valve 42 is opened, the urea water is pumped through the urea water passage 43, and the urea water is added to the exhaust gas. The urea water added to the exhaust gas is hydrolyzed by the heat of the exhaust gas, and ammonia is generated thereby. The ammonia is adsorbed by the SCR catalyst 31. With the ammonia adsorbed by the SCR catalyst 31 serving a reducing agent, NOx in the exhaust gas is selectively reduced. The exhaust passage 2 on the upstream side of the addition valve 42 also has a temperature sensor 11 provided to detect temperature of the exhaust gas.

Along with the internal combustion engine 1 configured as described before, an ECU 10 serving as an electronic control unit is provided to control the internal combustion engine 1. The ECU 10 controls the internal combustion engine 1 in accordance with an operating condition of the internal combustion engine 1 or a request of an operator.

The ECU 10, which is connected to a temperature sensor 11 through an electric line, receives an output signal of the temperature sensor 11. The ECU 10 estimates the temperature of the addition valve 42 and the SCR catalyst 31 during operation of the internal combustion engine 1 based on the output signal of the temperature sensor 11. The temperature of the addition valve 42 and the temperature of the SCR catalyst 31 may also be estimated based on the operating state of the internal combustion engine 1. The ECU 10 is connected to the addition valve 42 and the pump 44 through an electric line. The addition valve 42 and the pump 44 are controlled by the ECU 10.

During operation of the internal combustion engine 1, the ECU 10 executes reducing agent addition control that is control of supplying a reducing agent to the SCR catalyst 31 to reduce NOx in the exhaust gas that passes through the SCR catalyst 31. In the reducing agent addition control, the pump 44 is operated and the addition valve 42 is opened to add the urea water from the addition valve 42 to the exhaust gas, so that ammonia is supplied to the SCR catalyst 31 as a reducing agent. At this time, the amount of the urea water added to the exhaust gas from the addition valve 42 is determined based on the amount of NOx discharged from the internal combustion engine 1.

When the internal combustion engine 1 is stopped, the ECU 10 executes suck-back control that is control of returning the urea water in the addition valve 42 and the urea water passage 43 to the tank 41. Here, since the urea water is added to the exhaust gas through the addition valve 42 during operation of the internal combustion engine 1, the urea water remains in the addition valve 42 and in the urea water passage 43 at the time when the internal combustion engine 1 is stopped. After the stop of the internal combustion engine 1, the heat moves from the exhaust passage 2 to the addition valve 42, which temporarily increases the temperature of the addition valve 42. Accordingly, when urea water exists in the addition valve 42, the urea water is hydrolyzed inside the addition valve 42 to generate ammonia, which may corrode the addition valve 42. Furthermore, deposits may be formed due to urea. When the urea water remains in the addition valve 42 and in the urea water passage 43 while ambient temperature is low, the temperature of the urea water in the addition valve 42 and the urea water passage 43 may drop and freeze after the lapse of a certain amount of time from the stop of the internal combustion engine 1.

Accordingly, the ECU 10 executes the suck-back control after the stop of the internal combustion engine 1. In the suck-back control, the urea water in the addition valve 42 and the urea water passage 43 is made to flow backward to the tank 41 so as to remove the urea water from the inside of the addition valve 42 and the urea water passage 43. In this case, the ECU 10 reverses the pump 44 and opens the addition valve 42 to make the urea water flow backward such that the urea water is sucked into the tank 41 while the exhaust gas of the internal combustion engine 1 is sucked into the addition valve 42. The suck-back control is preferably started immediately after the stop of the internal combustion engine 1 so as to suppress generation of ammonia or formation of deposits. That is, the suck-back control is preferably started, for example, at the time when speed of the internal combustion engine 1 becomes zero. However, the suck-back control may be started not at the time point when the speed of the internal combustion engine 1 becomes zero but within a specified time after the time point when the speed of the internal combustion engine 1 becomes zero, the specified time being a time limit when generation of ammonia or formation of deposits can be suppressed.

However, even with the suck-back control being executed, a small amount of the urea water may still remain in places such as gaps between members that constitute the addition valve 42. Furthermore, when the suck-back control is executed, the exhaust gas of the internal combustion engine 1 staying in the exhaust passage 2 still has a high temperature, and the high-temperature exhaust gas flows into the addition valve 42 due to the suck-back control. This increases the temperature of the addition valve 42. As a result, deposits that are hardly soluble in water (for example, cyanuric acid) may be formed from the urea water. Since a filter does not exist on the upstream side of the addition valve 42, a relatively large amount of PM exists in the exhaust gas around the addition valve 42. During the suck-back control, the PM is also sucked into the addition valve 42. It has been found out that when PM exists in the urea water, the particle size of the deposits becomes larger.

Here, FIG. 2 illustrates a result of examination performed by mixing PM into urea water to examine how the particle size of the PM changes with a difference in PM concentration. A horizontal axis represents logarithm of the particle size of PM, while a vertical axis illustrates volume frequency. In FIG. 2, three levels of PM concentration including high concentration, middle concentration, and low concentration are compared. According to FIG. 2, a higher PM concentration promotes more agglomeration of PM and makes the particle size of the PM larger. More specifically, the amount of PM to be sucked during the suck-back control is larger in the case where the addition valve 42 is provided on the upstream side of the filter than in the case where the filter is provided on the downstream side of the filter. Therefore, in the former case, it can be said that the PM concentration becomes higher in the addition valve 42 and the particle size of the PM becomes larger in the urea water.

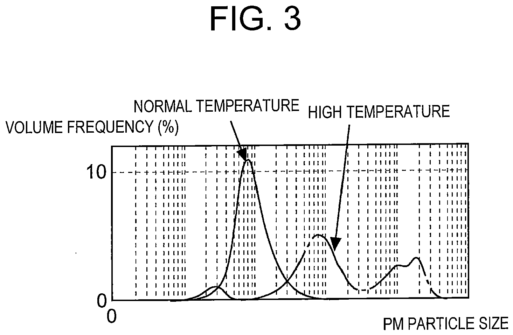

FIG. 3 illustrates a result of examination performed by mixing PM into urea water to examine how the particle size of the PM changes with a differences in temperature. A horizontal axis represents logarithm of the particle size of the PM, and a vertical axis represents volume frequency. In FIG. 3, a normal temperature case and a high-temperature case are compared. The high-temperature case assumes the situation where after the suck-back control is executed with the temperature of the addition valve 42 being, for example, 120°C, urea water remains in the gaps between the members in the addition valve 42, PM is sucked into the addition valve 42, and the temperature of the addition valve 42 increases up to, for example, 140°C due to the heat received from the exhaust passage 2. The PM concentration is identical in both the cases. FIG. 3 indicates that the particle size of the PM becomes larger as the temperature is higher. In the examination, the deposits caused by urea promote agglomeration of PM, as a result of which the particle size of the PM is increased. That is, the deposits caused by urea and the PM attract each other so that the particle size of the deposits becomes larger.

Therefore, if the suck-back control is executed immediately after the stop of the internal combustion engine 1, the PM concentration in the addition valve 42 goes up and the temperature of the addition valve 42 becomes higher. As a result, the deposits caused by urea are formed. Furthermore, the PM and the deposits caused by urea attract each other inside the addition valve 42, so that the particle size of the deposits can become larger. Thus, when the particle size of the deposits increases, clogging of the addition valve 42 may occur, or the sliding portion in the addition valve 42 may be worn away.

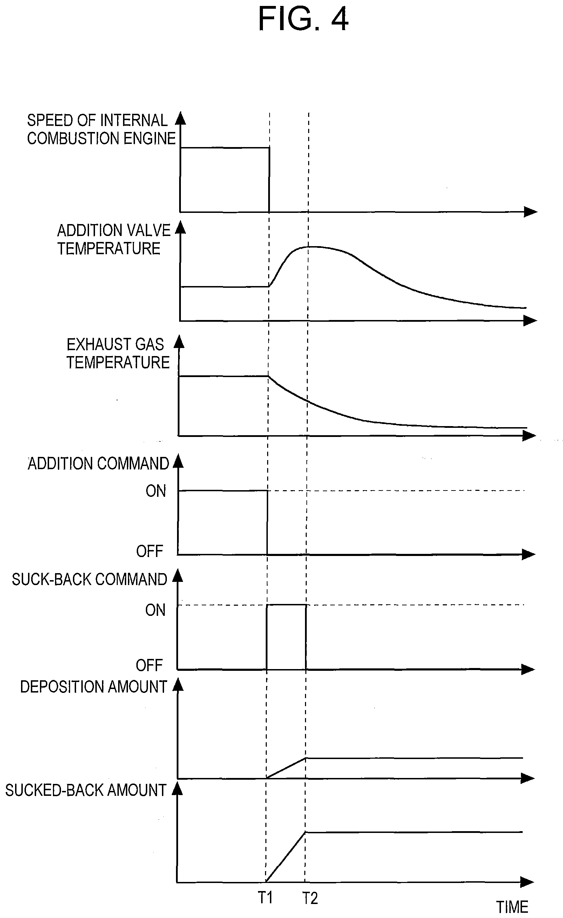

Here, FIG. 4 is a timechart in the case of executing the suck-back control only once immediately after the stop of the internal combustion engine. It can be said that the suck-back control according to FIG. 4 is conventional suck-back control. In FIG. 4, speed of the internal combustion engine 1, temperature of the addition valve 42, exhaust gas temperature, an addition command, a suck-back command, a deposition amount, and a sucked-back amount are illustrated in this order from the top. The temperature of the addition valve 42 is the temperature of the front end portion of the addition valve 42. The exhaust gas temperature is the temperature of the exhaust gas around the addition valve 42. The addition command is a command given to the addition valve 42 from the ECU 10 so as to add urea water for reducing NOx in the SCR catalyst 31. When the addition command is turned ON, urea water is added from the addition valve 42. When the addition command is turned OFF, urea water is not added from the addition valve 42. The suck-back command is a command given to the pump 44 and the addition valve 42 from the ECU 10 so as to suck the urea water back to the tank 41. When the suck-back command is turned ON, the pump 44 is reversely rotated and the addition valve 42 is opened so as to suck back the urea water. When the suck-back command is turned OFF, the urea water is not sucked back. The deposition amount represents the amount of the deposits formed in the addition valve 42. The sucked-back amount represents the total amount of the urea water returned to the tank 41.

In FIG. 4, at time T1 when the internal combustion engine 1 is stopped and the speed of the internal combustion engine 1 becomes zero, the addition command is changed from ON to OFF, and the suck-back command is changed from OFF to ON. Therefore, the suck-back control is started at time T1. The suck-back command is turned OFF when all the urea water in the addition valve 42 and the urea water passage 43 is sucked back to the tank 41 by the pump 44. Here, when the urea water is supplied from the addition valve 42 into the exhaust passage 2 during operation of the internal combustion engine 1, the urea water takes heat away from the addition valve 42, so that the temperature of the addition valve 42 becomes lower than the exhaust gas temperature. Since supply of the urea water is stopped after the stop of the internal combustion engine 1, the heat to be taken away from the addition valve 42 by the urea water decreases. Furthermore, the addition valve 42 receives heat from the exhaust gas and the exhaust passage 2 after the stop of the internal combustion engine 1, so that the temperature of the addition valve 42 tentatively increases after T1. Moreover, when the suck-back control is executed, the high-temperature exhaust gas in the exhaust passage 2 is sucked into the addition valve 42. This also increases the temperature of the addition valve 42. Thus, the temperature of the addition valve 42 approaches the exhaust gas temperature.

At time T2, all the urea water in the addition valve 42 and the urea water passage 43 is sucked back to the tank 41 by the pump 44. That is, at time T2, the suck-back command changes from ON to OFF, and the suck-back control is ended. When the suck-back command changes from ON to OFF, the temperature of the addition valve 42 is still high. Here, the urea water, though small in amount, still remains in places such as gaps in the addition valve 42 even after the suck-back control is executed as described before. Accordingly, when the temperature of the addition valve 42 increases after T1, deposits are formed. The deposition amount in this case is smaller than that in the case where the suck-back control is not executed, because the suck-back control causes most of the urea water in the addition valve 42 to be sucked back. However, if the conventional suck-back control is executed, the particle size of the deposits tends to increase due to PM sucked into the addition valve 42. Therefore, clogging or wear of the addition valve 42 may occur due to the deposits.

Accordingly, in the present embodiment, the following control is executed instead of the conventional suck-back control illustrated in FIG. 4. That is, in the present embodiment, after the suck-back control is executed for returning the urea water to the tank 41, the urea water is discharged from the tank 41 to the urea water passage 43 such that the urea water is injected into the exhaust passage 2 from the addition valve 42. As a result, the deposits in the addition valve 42 are discharged into the exhaust passage 2 with the urea water. Since the temperature of the addition valve 42 can be decreased by circulating the urea water to the addition valve 42, it becomes possible to suppress subsequent formation of deposits and increase in the particle size of the deposits. Such control is hereinafter referred to as second control or sweep-out control which is executed by the ECU 10 to discharge the urea water toward the addition valve 42 from the tank 41 after the suck-back control according to the present embodiment is executed. When the suck-back control is executed again after the second control is executed, redeposition of the urea water or freezing of the urea water inside the addition valve 42 and the urea water passage 43 can be suppressed. Hereinafter, the suck-back control executed immediately after the stop of the internal combustion engine 1 and before the second control is referred to as first control, and the suck-back control executed after the second control is referred to as third control. In the present embodiment, the ECU 10 functions as a control device of the present invention by executing the first control, the second control, and the third control.

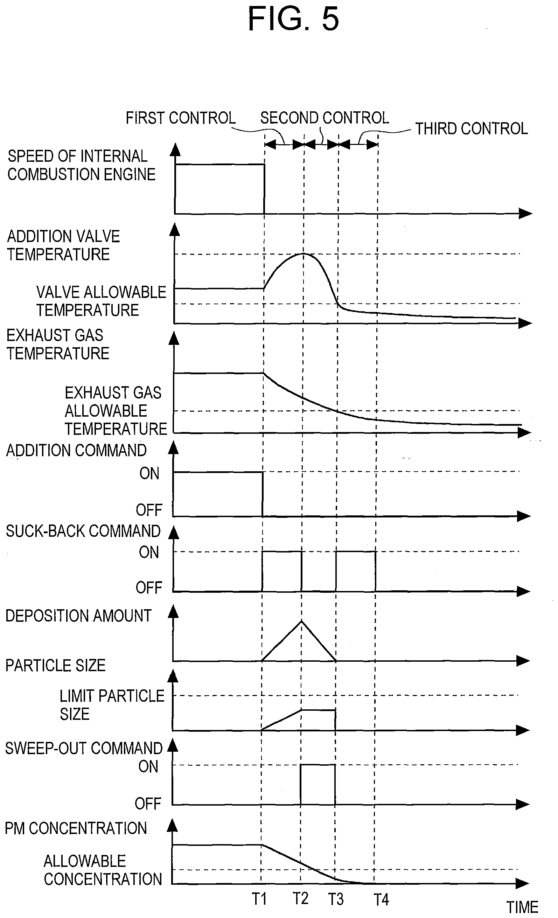

FIG. 5 is a timechart in the case of executing the first control, the second control, and the third control according to the present embodiment. In FIG. 5, the speed of the internal combustion engine 1, the temperature of the addition valve 42, the exhaust gas temperature, the addition command, the suck-back command, the deposition amount, the particle size of deposits, a sweep-out command, and PM concentration are illustrated in this order from the top. The particle size of the deposits is the particle size of the deposits in the addition valve 42. The sweep-out command is a command given to the pump 44 and the addition valve 42 from the ECU 10 to return the urea water to the addition valve 42 side. When the suck-back command is turned ON, the pump 44 is normally rotated and the addition valve 42 is opened to discharge the urea water from the tank 41 to the urea water passage 43. When the suck-back command is turned OFF, the urea water is not discharged from the tank 41 to the urea water passage 43. The PM concentration represents the PM concentration of exhaust gas in the exhaust passage 2. Since the PM in the exhaust gas adheres to the exhaust passage 2 and the like after the stop of the internal combustion engine 1, the PM concentration gradually decreases after the stop of the internal combustion engine 1.

In FIG. 5, at time T1, the internal combustion engine 1 is stopped and the speed of the internal combustion engine 1 becomes zero. Consequently, the addition valve 42 receives heat from the exhaust passage 2. As a result, the temperature of the addition valve 42 increases at time T1. This may lead to generation of ammonia or formation of deposits inside the addition valve 42. As a solution, the suck-back command is turned ON at time T1, and the first control is started at T1. However, since the first control causes high-temperature exhaust gas to be sucked into the addition valve 42, the temperature of the addition valve 42 further increases. At this point, the PM concentration is also relatively high, and so the PM is sucked into the addition valve 42. Accordingly, during the first control, due to the existence of the PM inside the addition valve 42 while the inside of the addition valve 42 is in a high-temperature state, the amount of the deposits from the urea water remaining in the addition valve 42 is gradually increases, and the particle size of the deposits also gradually increases.

In FIG. 5, the first control is ended at time T2. That is, the suck-back command is turned OFF since sucking-back of the urea water is completed. Time T2 is a point of time when all the urea water in the addition valve 42 and the urea water passage 43 is sucked back to the tank 41. When the pump 44 is operated with a specified amount of electric power (which may be a specified speed) after the stop of the internal combustion engine 1, time taken to suck all the urea water in the addition valve 42 and the urea water passage 43 back to the tank 41 is approximately constant. If the time is obtained in advance by an experiment or simulation, a period from T1 to T2 is determined. When a flowmeter is provided in the tank 41, an actual amount of sucked-back urea water can be obtained based on the flowmeter. In this case, T2 may be defined as a point of time when the actual amount of sucked-back urea water reaches the capacity of the addition valve 42 and the urea water passage 43 obtained in advance. When the suck-back command is turned OFF at time T2, the pump 44 is stopped.

At time T2, the sweep-out command is turned ON at the same time as the suck-back command is turned OFF. Accordingly, the second control is started at time T2. Thus, in the present embodiment, the first control and the second control are continuously executed. While it takes time for the urea water to reach the addition valve 42 after the start of the second control, the gas inside the urea water passage 43 is pushed by the urea water discharged from the pump 44 and passes through the addition valve 42, so that the deposits may be discharged into the exhaust passage 2 together with the gas. Therefore, the deposition amount can decrease at time T2. Since the high-temperature exhaust gas does not flow into the addition valve 42 after time T2, increase in the particle size of the deposits is also suppressed. This makes it possible to prevent the particle size of the deposits from reaching a limit particle size. The limit particle size is a particle size of the deposits when the influence of the deposits on clogging and wear of the addition valve 42 may exceed an allowable range. For example, the limit particle size may be a particle size somewhat smaller than the diameter of the nozzle hole of the addition valve 42, the particle size having a possibility of disabling the deposits from passing through the nozzle hole of the addition valve 42 if it becomes any larger.

Furthermore, since the second control causes the urea water to pass through the addition valve 42, the urea water takes away heat of the addition valve 42, which lowers the temperature of the addition valve 42. Then, at the time expressed by T3, the sweep-out command is turned OFF. That is, the second control is ended at T3. Time T3 can be obtained in the same manner as time T2. That is, when the pump 44 is operated with a specified amount of electric power (which may be a specified speed), the time taken for the urea water to move from the tank 41 to the nozzle hole of the addition valve 42 becomes approximately constant. The time is obtained in advance by an experiment or a simulation, so that a period from T2 to T3 is determined. A flowmeter of the urea water may also be provided in the tank 41, and when an integrated amount of a flow rate of the urea water, which is measured by the flowmeter, reaches an amount of the urea water added from the addition valve 42, that point of time may be defined as T3. In FIG. 5, when the second control is executed, fall in the temperature of the addition valve 42 is promoted. Furthermore, since the addition valve 42 is filled with the urea water, formation of the deposits is also suppressed. As a result, the deposition amount and the particle size of the deposits hardly increase after T3.

Since it is necessary to suppress freezing of the urea water in the addition valve 42 and the urea water passage 43, the third control is executed after the second control is executed. In FIG. 5, the third control is started at time T3 when the second control is ended. At the time expressed by T3, the urea water is added to the exhaust gas and a certain amount of time has already elapsed since the time of stopping the internal combustion engine 1. Consequently, the temperature of the addition valve 42 is lower than a valve allowable temperature, and the exhaust gas temperature is lower than the exhaust gas allowable temperature. Furthermore, the PM concentration is lower than an allowable concentration. The valve allowable temperature is an addition valve temperature at which the particle size of the deposits may reach the limit particle size. The exhaust gas allowable temperature is an exhaust gas temperature at which the particle size of the deposits may reach the limit particle size. The allowable concentration is PM concentration at which the particle size of the deposits may reach the limit particle size if the exhaust gas temperature is higher than the exhaust gas allowable temperature. The exhaust gas allowable temperature in the present embodiment corresponds to the allowable temperature in the present invention. Therefore, in FIG. 5, increase in the particle size of the deposits is suppressed even when the third control is executed continuously from the second control. Time T4, which is a point of time when the third control is ended, is determined in the same manner as in the case of time T2 that is when the first control is ended. After the third control is ended at the time expressed by T4, the temperature of the addition valve 42 is sufficiently low. Accordingly, subsequent formation of the deposits and increase in the particle size of the deposits caused by the urea water remaining in the addition valve 42 are suppressed.

As described in the foregoing, the first control can suppress generation of ammonia from the urea water. Accordingly, it becomes possible to suppress occurrence of corrosion in the addition valve 42. Furthermore, when the first control is executed, only a small amount of urea water remains in the addition valve 42, and therefore formation of a large amount of the deposits can be suppressed. The second control can discharge the deposits and PM in the addition valve 42 and the urea water passage 43 to the exhaust passage 2. Furthermore, since the second control can lower the temperature of the addition valve 42, progress of formation of the deposits inside the addition valve 42 can be suppressed. Furthermore, the third control can remove the urea water from the inside of the addition valve 42 and the urea water passage 43, so that freezing of the urea water inside the addition valve 42 and the urea water passage 43 can be suppressed. When the third control is executed, the exhaust gas temperature and the temperature of the addition valve 42 are low enough to be able to suppress progress of formation of the deposits inside the addition valve 42 even with the urea water remaining in places such as the gaps between the members that constitute the addition valve 42. Thus, since formation of the deposits in the addition valve 42 and increase in the particle size of the deposits can be suppressed, wear in the addition valve 42 or clogging of the addition valve 42 can be suppressed.

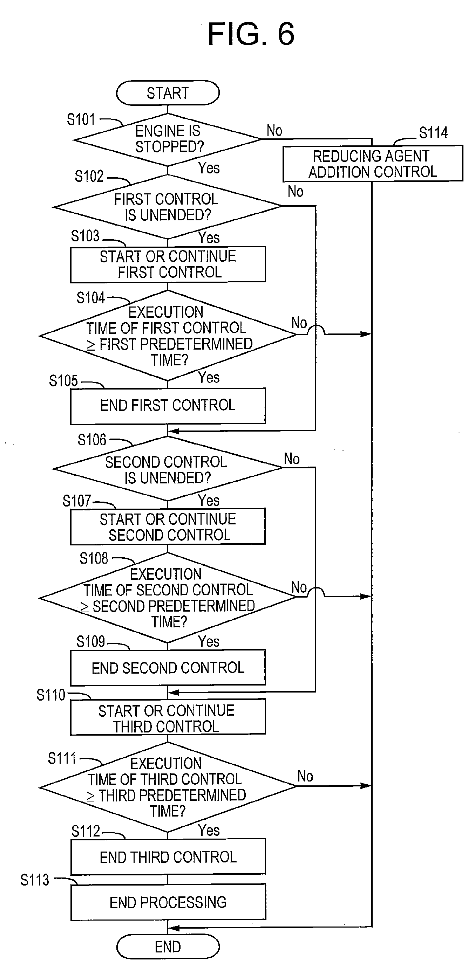

FIG. 6 is a flowchart illustrating flows of the first control, the second control, and the third control according to the present embodiment. The flowchart is performed by the ECU 10 at each specified time.

In step S101, the ECU 10 determines whether or not the internal combustion engine 1 is stopped. In step S101, the ECU 10 determines that the internal combustion engine 1 is stopped, when the engine speed is zero. Since the first control, the second control, and the third control are executed after the stop of the internal combustion engine 1, the ECU 10 determines whether or not a precondition for executing these controls are satisfied in step S101. When positive determination is made in step S101, the processing proceeds to step S102, whereas when the negative determination is made, the processing proceeds to step S114. In step S114, the reducing agent addition control is executed.

In step S102, the ECU 10 determines whether or not the first control is in an unended state. In step S102, it is determined whether or not it is necessary to execute the first control or to continue the first control. When the first control is not executed after the stop of the internal combustion engine 1 and when the first control is currently in execution, the ECU 10 determines that the first control is in the unended state. The ECU 10 stores whether or not the first control is executed after the stop of the internal combustion engine 1 and whether or not the first control is currently in execution. When positive determination is made in step S102, the processing proceeds to step S103, whereas when negative determination is made, the processing proceeds to step S106.

In step S103, the ECU 10 starts the first control or continues the first control. That is, when the first control is not started yet, the first control is started. When the first control is already started, the first control is continued. In the first control, the ECU 10 reversely rotates the pump 44 and opens the addition valve 42. Once the processing of step S103 is ended, the processing proceeds to step S104.

In step S104, the ECU 10 determines whether or not execution time of the first control is equal to or more than a first predetermined time. The execution time of the first control is counted by the ECU 10. The first predetermined time is obtained in advance by an experiment or a simulation as the time taken to suck all the urea water in the addition valve 42 and the urea water passage 43 back to the tank 41, and is stored in the ECU 10. In step S104, it can be said that the ECU 10 determines whether or not sucking-back of the urea water is completed in the first control. In other words, it can be said that the ECU 10 determines whether or not the amount of urea water returned to the tank 41 becomes equal to or more than an amount corresponding to the capacity of the addition valve 42 and the urea water passage 43. In the present embodiment, a sucked-back amount of the urea water until all the urea water in the addition valve 42 and the urea water passage 43 is sucked back to the tank 41 corresponds to the specified amount in the present invention. When positive determination is made in step S104, the processing proceeds to step S105, whereas when negative determination is made, the flowchart is tentatively ended.

In step S105, the ECU 10 ends the first control. That is, the ECU 10 stops reverse rotation of the pump 44. In this case, the addition valve 42 may be closed. In the present embodiment, however, the addition valve 42 may be left opened as the second control is executed continuously from the first control. Then, the processing proceeds to step S106.

In step S106, the ECU 10 determines whether or not the second control is in an unended state. In step S106, it is determined whether or not it is necessary to execute the second control or to continue the second control. That is, when the second control is not executed after the stop of the internal combustion engine 1 and when the second control is currently in execution, the ECU 10 determines that the second control is in the unended state. The ECU 10 stores whether or not the second control is executed after the stop of the internal combustion engine 1, and whether or not the second control is currently in execution. When positive determination is made in step S106, the processing proceeds to step S107, whereas when negative determination is made, the processing proceeds to step S110.

In step S107, the ECU 10 starts the second control or continues the second control. That is, when the second control is not started yet, the second control is started. When the second control is already started, the second control is continued. In the second control, the ECU 10 normally rotates the pump 44 and opens the addition valve 42. Once the processing of step S107 is ended, the processing proceeds to step S108.

In step S108, the ECU 10 determines whether or not execution time of the second control is equal to or more than second predetermined time. The execution time of the second control is counted by the ECU 10. The second predetermined time herein is obtained in advance by an experiment or a simulation as time taken to fill the addition valve 42 and the urea water passage 43 with urea water and to add the urea water to the exhaust passage 2 from the addition valve 42. The obtained second predetermined time is stored in the ECU 10. In other words, in step S108, it can be said that the ECU 10 determines whether or not the amount of the urea water discharged from the tank 41 becomes equal to or more than the amount corresponding to the capacity of the addition valve 42 and the urea water passage 43. The second predetermined time in step S108 may be the same as the first predetermined time in step S104, and may be longer than the first predetermined time. When the second predetermined time is made longer than the first predetermined time, more urea water is injected from the addition valve 42 to the exhaust passage 2, so that the deposits can more reliably be discharged. Even when the second predetermined time is defined as the time taken to fill the addition valve 42 with the urea water, the deposits can be discharged out of the addition valve 42 by the gas in the urea water passage 43 as described before, and the deposits pushed by the urea water may be extruded out of the addition valve 42. Therefore, the second control may be executed at least for the same period of time as the time taken to execute the first control. In step S108, it can be said that the ECU 10 determines whether or not discharge of the deposits from the addition valve 42 is completed. The present embodiment represents the case where the exhaust gas temperature becomes less than the exhaust gas allowable temperature at the time of ending the second control. When positive determination is made in step S108, the processing proceeds to step S109, whereas when negative determination is made, the flowchart is tentatively ended.

In step S109, the ECU 10 ends the second control. That is, the ECU 10 stops normal rotation of the pump 44. In this case, the addition valve 42 may be closed. In the present embodiment, however, the addition valve 42 may be left opened as the third control is executed continuously from the second control. Then, the processing proceeds to step S110.

In step S110, the ECU 10 starts the third control or continues the third control. That is, when the third control is not started yet, the third control is started. When the third control is already started, the third control is continued. In the third control, the ECU 10 reversely rotates the pump 44 and opens the addition valve 42. The ECU 10 stores whether or not the third control is started after the stop of the internal combustion engine 1, and whether or not the third control is currently in execution. Once the processing of step S110 is ended, the processing proceeds to step S111.

In step S111, the ECU 10 determines whether or not execution time of the third control is equal to or more than third predetermined time. The execution time of the third control is counted by the ECU 10. The third predetermined time in step S111 is the time taken to suck all the urea water in the addition valve 42 and the urea water passage 43 into the tank 41. The third predetermined time is the same as the first predetermined time in step S104. In step S111, it can be said that the ECU 10 determines whether or not sucking-back of the urea water is completed. When positive determination is made in step S111, the processing proceeds to step S112, whereas when negative determination is made, the flowchart is tentatively ended.

In step S112, the ECU 10 ends the third control. That is, the ECU 10 stops reverse rotation of the pump 44, and opens the addition valve 42. When the processing of step S112 is ended, the processing proceeds to step S113. In step S113, the ECU 10 performs end processing of the flowchart. The end processing is configured to prevent the present flowchart from being performed until the internal combustion engine 1 is restarted. By executing the end processing, the present flowchart is not performed unless the internal combustion engine 1 is restarted.

As described in the foregoing, according to the present embodiment, when the first control is executed, generation of ammonia from urea water can be suppressed. This makes it possible to suppress occurrence of corrosion in the addition valve 42. Moreover, when the second control is executed after the first control is executed, the deposits in the addition valve 42 and the urea water passage 43 can be discharged to the exhaust passage 2. Accordingly, clogging or wear of the addition valve 42 can be suppressed. Furthermore, when the third control is executed after the second control is executed, formation of the deposits in the addition valve 42 can be suppressed, while the urea water can be removed from the inside of the addition valve 42 and the urea water passage 43. Therefore, clogging or wear of the addition valve 42 can be suppressed, while freezing of the urea water inside the addition valve 42 and the urea water passage 43 can be suppressed.

In the present embodiment, the second control is started at the time when the first control is ended. However, it is not necessary to continuously execute the first control and the second control. The second control may be started after a certain amount of time being elapsed from the end of the first control. Similarly, in the present embodiment, the third control is started at the time when the second control is ended. However, it is not necessary to continuously execute the second control and the third control. The third control may be started after a certain amount of time being elapsed from the end of the second control.

For example, the particle size of the deposits after the first control may be estimated, and the second control may be started before the estimated particle size of the deposits reaches the limit particle size. The particle size of the deposits at any given time after the first control is related to the exhaust gas temperature at the time of stopping the internal combustion engine 1. Therefore, when relation between the exhaust gas temperature at the time of stopping the internal combustion engine 1 and the particle size of the deposits at any given time after the first control is obtained in advance by an experiment or a simulation, the particle size of the deposits at any given time after the first control can be estimated based on the exhaust gas temperature at the time of stopping the internal combustion engine 1. The second control may be started before the time when the particle size of the deposits reaches the limit particle size. Since the exhaust gas temperature after the stop of the internal combustion engine 1 is influenced by ambient temperature, the estimated particle size of the deposits may be corrected based on the ambient temperature at the time of stopping the internal combustion engine 1. Furthermore, since the particle size of the deposits is influenced by PM concentration of the exhaust gas, the estimated particle size of the deposits may be corrected based on the PM concentration of the exhaust gas at the time of stopping the internal combustion engine 1. The PM concentration of the exhaust gas can be estimated from the operating state immediately before the stop of the internal combustion engine 1.

<Second Embodiment> In the first embodiment, the first control, the second control, and the third control are executed after the stop of the internal combustion engine 1. However, when the exhaust gas temperature at the time of stopping the internal combustion engine 1 or the temperature of the addition valve 42 at the time of stopping the internal combustion engine 1 is sufficiently low, the particle size of the deposits may not increase inside the addition valve 42 even with the PM being sucked into the addition valve 42. Therefore, when the particle size of the deposits caused by the urea water remaining in places such as gaps in the addition valve 42 does not reach the limit particle size after the suck-back control is executed, it is not necessary to execute the sweep-out control afterward.

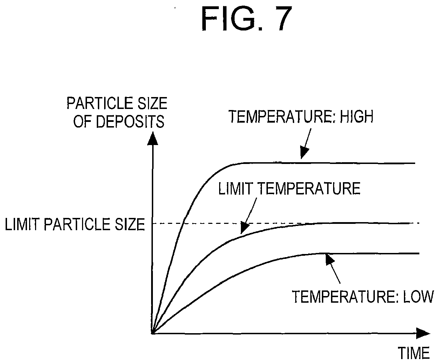

FIG. 7 illustrates transition of the particle size of the deposits at each temperature. As illustrated in FIG. 7, the particle size of the deposits increases with the passage of time, but in the end, the particle size converges on a fixed particle size corresponding to temperature. The converged particle size is larger as the temperature is higher. Consequently, there is a temperature at which the converged particle size of the deposits becomes the limit particle size. Hereinafter, the temperature at which the converged particle size of the deposits becomes the limit particle size is referred to as a limit temperature. Even when the suck-back control is executed after the stop of the internal combustion engine 1, the converged particle size of the deposits becomes smaller than the limit particle size unless the temperature of the addition valve 42 becomes equal to or more than the limit temperature. Therefore, unless the temperature of the addition valve 42 after the stop of the internal combustion engine 1 become equal to or more than the limit temperature, the particle size of the deposits does not become the limit particle size or larger even when the particle size of the deposits increases. Accordingly, the particle size of the deposits falls within the allowable range. Since the particle size of the deposits is also dependent on the PM concentration as described in FIG. 2, the limit temperature may be set in consideration of the PM concentration, or the limit temperature may be set on the assumption of a highest PM concentration.

Here, the temperature of the addition valve 42 after the stop of the internal combustion engine 1 can be estimated based on the temperature of the addition valve 42 at the time of stopping the internal combustion engine 1 and on the exhaust gas temperature at the time of stopping the internal combustion engine 1. The temperature of the addition valve 42 at the time of stopping the internal combustion engine 1 is estimated based on the temperature of the addition valve 42 during operation of the internal combustion engine 1. When the urea water is supplied from the addition valve 42 to the exhaust passage 2 during operation of the internal combustion engine 1, the urea water takes heat away from the addition valve 42, so that the temperature of the addition valve 42 becomes lower than the exhaust gas temperature. Since supply of the urea water is stopped after the stop of the internal combustion engine 1, the heat to be taken away from the addition valve 42 by the urea water decreases. Furthermore, after the stop of the internal combustion engine 1, the addition valve 42 receives heat from the exhaust gas and the exhaust passage 2. Accordingly, the temperature of the addition valve 42 increases after the stop of the internal combustion engine 1. The temperature of the addition valve 42 at the time of the stop of the internal combustion engine 1 has a correlation with the exhaust gas temperature at the time of stopping the internal combustion engine 1. Accordingly, by obtaining the correlation by an experiment or a simulation in advance, the temperature of the addition valve 42 at the time of stopping the internal combustion engine 1 can be obtained based on the exhaust gas temperature at the time of stopping the internal combustion engine 1. The exhaust gas temperature at the time of stopping the internal combustion engine 1 is exhaust gas temperature detected by the temperature sensor 11 at the time of stopping the internal combustion engine 1. The exhaust gas temperature at the time of stopping the internal combustion engine 1 can also be estimated based on the operating state of the internal combustion engine 1.

During the suck-back control, the addition valve 42 is filled with the exhaust gas from the internal combustion engine 1, and so the temperature of the addition valve 42 during the suck-back control changes with the exhaust gas temperature at the time of stopping the internal combustion engine 1. The temperature of the addition valve 42 during the suck-back control also changes with the temperature of the addition valve 42 at the time when the suck-back control is started, i.e., at the time when the internal combustion engine 1 is stopped. Accordingly, when, for example,relation among elapsed time from the time of stopping the internal combustion engine 1, the exhaust gas temperature at the time of stopping the internal combustion engine 1, the temperature of the addition valve 42 during the suck-back control is obtained in advance by an experiment or a simulation, and is stored as a map, the temperature of the addition valve 42 during the suck-back control can be obtained from the map based on the elapsed time from the time of stopping the internal combustion engine 1 and the exhaust gas temperature at the time of stopping the internal combustion engine 1. Furthermore, correction coefficients are obtained by an experiment or a simulation in advance for correcting the temperature of the addition valve 42 during the suck-back control with a temperature of the addition valve 42 at the time of starting the suck-back control. The temperature of the addition valve 42 obtained from the map is multiplied by the correction coefficients so that the temperature of the corrected addition valve 42 can be obtained. Thus, during the suck-back control, the temperature of the addition valve 42 in accordance with the elapsed time from the time of starting the suck-back control and the exhaust gas temperature at the time of stopping the internal combustion engine 1 can be obtained. Since increase in the temperature of the addition valve 42 is suppressed by ending the suck-back control, the temperature of the addition valve 42 at the time of ending the suck-back control is defined as a highest temperature of the addition valve 42 after the stop of the internal combustion engine 1 in the present embodiment.

As described in the foregoing, the temperature of the addition valve 42 during the suck-back control in the case where the suck-back control is executed once is related to the elapsed time from the time of stopping the internal combustion engine 1 and the exhaust gas temperature at the time of stopping the internal combustion engine 1. Accordingly, the temperature of the addition valve 42 at any given time can be predicted by using the exhaust gas temperature at the time of stopping the internal combustion engine 1 as a parameter. The highest temperature of the addition valve 42 after the stop of the internal combustion engine 1 is the temperature of the addition valve 42 at the time of ending the suck-back control. Since the time to execute the suck-back control can be obtained in advance, the temperature of the addition valve 42 at the time of ending the suck-back control can be obtained based on the exhaust gas temperature at the time of stopping the internal combustion engine 1. Therefore, it becomes possible to determine whether or not the temperature of the addition valve 42 reaches the limit temperature after the suck-back control is executed, based on the exhaust gas temperature at the time of stopping the internal combustion engine 1. Hereinafter, the exhaust gas temperature at the time of stopping the internal combustion engine 1 when the temperature of the addition valve 42 reaches the limit temperature is defined as a temperature threshold. That is, if the exhaust gas temperature at the time of stopping the internal combustion engine 1 is less than the temperature threshold, it is not necessary to execute the sweep-out control. In this case, the suck-back control may be executed only once. Thus, the suck-back control executed only once is hereinafter referred to as fourth control. The temperature threshold in the present embodiment corresponds to the predetermined temperature in the present invention.

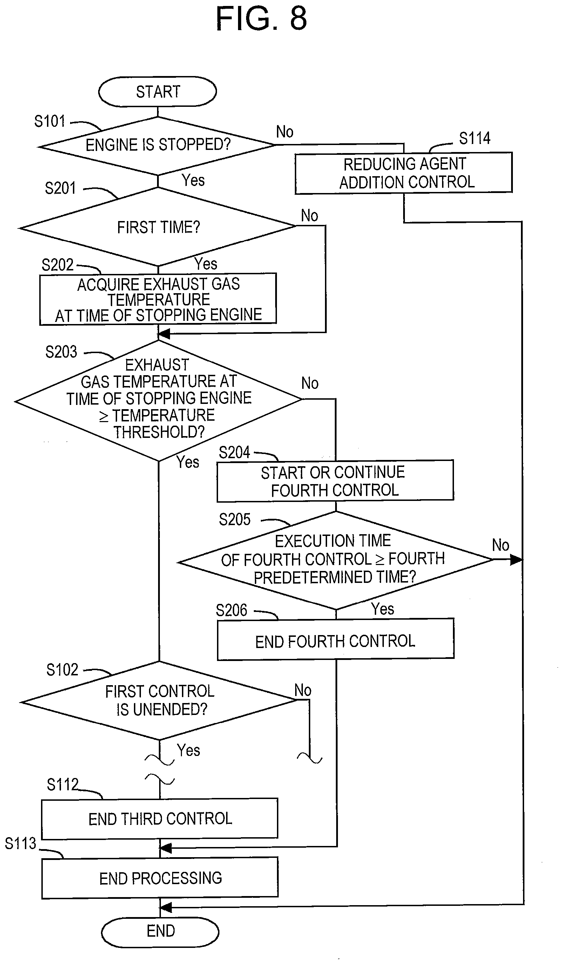

FIG. 8 is a flowchart illustrating flows of the first control, the second control, the third control, and the fourth control according to the present embodiment. The flowchart is performed by the ECU 10 at each specified time. The steps that perform the same processing as in the flowchart described before are designated by the same reference signs to omit a description thereof. Some of the steps that perform the same processing as in the flowchart described before are also omitted in the drawing. In the present embodiment, the ECU 10 functions as a control device by performing the processing in the flowchart illustrated in FIG. 8.

In the flowchart illustrated in FIG. 8, when positive determination is made in step S101, the processing proceeds to step S201. In step S201, it is determined whether or not step S201 is executed for the first time. That is, in step S201, it is determined whether or not the flowchart is executed for the first time after the stop of the engine. The ECU 10 stores whether or not the flowchart is executed after the stop of the engine. The stored information may be reset at the start of the engine or in step S113. In the present flowchart, it is necessary to acquire the exhaust gas temperature at the time of stopping the internal combustion engine 1. Accordingly, in step S201, it is determined whether or not the current time is immediately after the stop of the internal combustion engine 1. When positive determination is made in step S201, the processing proceeds to step S202, whereas when negative determination is made, the processing proceeds to step S203.

In step S202, the exhaust gas temperature at the time of stopping the internal combustion engine 1 is acquired. That is, the exhaust gas temperature at the time of performing the processing in the flowchart for the first time after the stop of the internal combustion engine 1 is defined as exhaust gas temperature at the time of stopping the internal combustion engine 1. The exhaust gas temperature is detected by the temperature sensor 11. The exhaust gas temperature at the time of stopping the internal combustion engine 1 is stored in the ECU 10. Once the processing of step S202 is ended, the processing proceeds to step S203.

In step S203, it is determined whether or not the exhaust gas temperature at the time of stopping the internal combustion engine 1 is equal to or more than the temperature threshold. In step S203, it is determined whether or not, on the assumption that the suck-back control is executed, the subsequent particle size of the deposits in the addition valve 42 becomes the limit particle size or larger. When positive determination is made in step S203, it is necessary to discharge the deposits from the inside of the addition valve 42. Accordingly, the processing proceeds to step S102 so that the first control, the second control, and the third control are executed. Since the processing after step S102 is similar to the processing of in the flowchart described before, a description thereof is omitted.

Meanwhile, when negative determination is made in step S203, the suck-back control needs to be executed only once. Accordingly, the processing proceeds to step S204, where the fourth control is started, or the fourth control is continued. That is, when the fourth control is not started yet, the fourth control is started. When the fourth control is already started, the fourth control is continued. In the fourth control, the ECU 10 reversely rotates the pump 44 and opens the addition valve 42. The ECU 10 stores whether or not the fourth control is started after the stop of the internal combustion engine 1, and whether or not the fourth control is currently in execution. Once the processing of step S204 is ended, the processing proceeds to step S205.

In step S205, the ECU 10 determines whether or not execution time of the fourth control is equal to or more than fourth predetermined time. The execution time of the fourth control is counted by the ECU 10. The fourth predetermined time in step S205 is the time taken to suck all the urea water in the addition valve 42 and the urea water passage 43 into the tank 41. The fourth predetermined time is the same as the first predetermined time in step S104. In step S205, the ECU 10 determines whether or not sucking-back of the urea water is completed. When positive determination is made in step S205, the processing proceeds to step S206, whereas when negative determination is made, the flowchart is tentatively ended.

In step S206, the ECU 10 ends the fourth control. That is, the ECU 10 stops reverse rotation of the pump 44, and opens the addition valve 42. When processing of step S206 is completed, the processing proceeds to step S113 and the end processing is performed. As a consequence, the present flowchart is not performed until the internal combustion engine 1 is restarted.

As described in the foregoing, according to the present embodiment, the first control, the second control, and the third control are executed only in the case where the particle size of the deposits is predicted to become the limit particle size or larger when the first control is executed. In the case where the particle size of the deposits is predicted to be less than the limit particle size when the first control is executed, only the fourth control is executed. As a result, it becomes possible to prevent the sweep-out control from being executed more than necessary. This makes it possible to reduce the amount of consumption of electric power.

<Third Embodiment> In the first embodiment and the second embodiment, the third control is started concurrently with the end of the second control. However, when the temperature of the addition valve 42 or the exhaust gas temperature is still high at the time of starting the third control, executing the third control may cause reformation of deposits and increase in the particle size of the deposits to the limit particle size or larger due to the exhaust gas sucked into the addition valve 42. Accordingly, in the present embodiment, the third control is started at the time when the particle size of the deposits is predicted to be less than the limit particle size even with the third control being executed.

Even with the third control being executed, the particle size of the deposits becomes less than the limit particle size if the temperature of the addition valve 42 at the time of starting the third control and the exhaust gas temperature at the time of starting the third control are sufficiently low. Accordingly, in the present embodiment, the exhaust gas temperature after the end of the second control is estimated, and the third control is started at the time when the exhaust gas temperature is lowered to a temperature at which the particle size of the deposits is predicted to be less than the limit particle size even with the third control being executed. That is, the third control is started after the exhaust gas temperature becomes less than the exhaust gas allowable temperature. The temperature of the addition valve 42 being lower than the valve allowable temperature may be added to the conditions of starting the third control. However, since the temperature of the addition valve 42 is related to the exhaust gas temperature, sufficient fall in the temperature of the addition valve 42 can also be determined based on the exhaust gas temperature.

First, the exhaust gas temperature during the second control is estimated. The exhaust gas temperature during the second control can be estimated based on an exhaust gas temperature at the time of starting the second control, a temperature of the urea water added to the exhaust passage 2, and elapsed time from the time of starting the second control. The exhaust gas temperature at the time of starting the second control is the exhaust gas temperature at the time of ending the first control, which can be estimated based on the exhaust gas temperature at the time of stopping the internal combustion engine 1. Therefore, the exhaust gas temperature during the second control can be estimated based on the elapsed time from the time of starting the second control, the temperature of the urea water added to the exhaust passage 2, and the exhaust gas temperature at the time of stopping the internal combustion engine 1. The temperature of the urea water can be detected by attaching a temperature sensor to the tank 41 or the urea water passage 43, for example.

Furthermore, since the exhaust gas temperature after the end of the second control is related to an exhaust gas temperature at the time of ending the second control and elapsed time from the time of ending the second control, the exhaust gas temperature after the end of the second control can be obtained based on these values. Therefore, when relation among the exhaust gas temperature at the time of ending the second control, the elapsed time from the time of ending the second control, and the exhaust gas temperature after the end of the second control is obtained in advance by an experiment or a simulation, and the obtained relation is stored in the ECU 10, the exhaust gas temperature at any given time after the end of the second control can be obtained.

As described in the foregoing, the parameters necessary to obtain the exhaust gas temperature after the end of the second control are the exhaust gas temperature at the time of stopping the internal combustion engine 1, the temperature of the urea water, and the elapsed time from the time of stopping the internal combustion engine 1. Therefore, the time taken to lower the exhaust gas temperature to less than the exhaust gas allowable temperature after the time of stopping the internal combustion engine 1 can be obtained from the exhaust gas temperature at the time of stopping the internal combustion engine 1 and the temperature of the urea water. The time when the exhaust gas temperature is lowered to less than the exhaust gas allowable temperature is the time of starting the third control. Thus, the time of starting the third control at which the particle size of the deposits becomes less than the limit particle size even with the third control being executed can be obtained from the exhaust gas temperature at the time of stopping the internal combustion engine 1 and the temperature of urea water. Relation among a period from the time of stopping the internal combustion engine 1 to the time of starting the third control, the exhaust gas temperature at the time of stopping the internal combustion engine 1, and the temperature of urea water can be obtained in advance by an experiment or a simulation, and be stored in the ECU 10. The temperature of the urea water is assumed to be constant through the first control to the third control. Thus, the time of starting the third control can be determined at the time when the internal combustion engine 1 is stopped. In the case where the temperature of the urea water is assumed to be constant, the period from the time of ending the second control to the time of starting the third control becomes longer when the temperature of the exhaust gas at the time of stopping the internal combustion engine 1 is high than when the temperature of the exhaust gas at the time of stopping the internal combustion engine 1 is low.

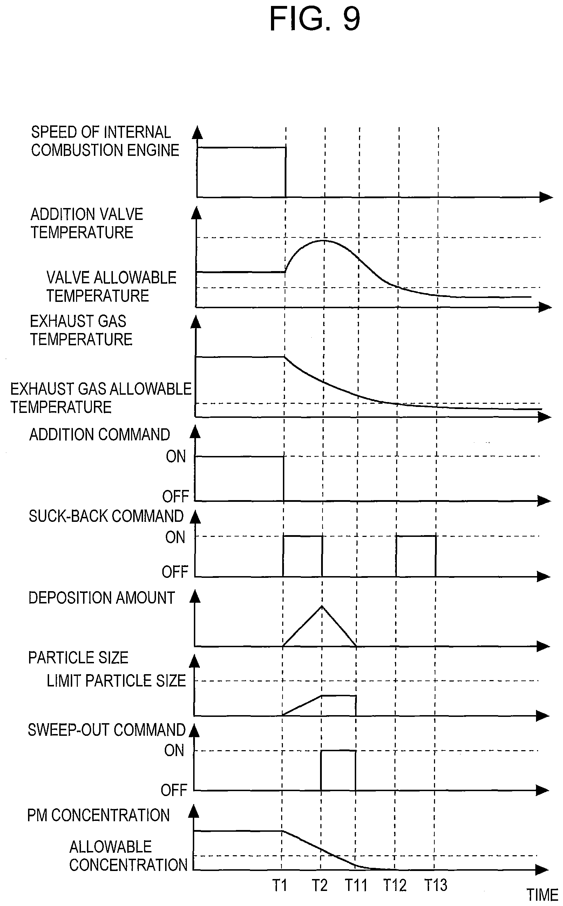

FIG. 9 is a timechart in the case of executing the first control, the second control, and the third control according to the present embodiment. In FIG. 9, the speed of the internal combustion engine 1, the temperature of the addition valve 42, the exhaust gas temperature, the addition command, the suck-back command, the deposition amount, the particle size of deposits, the sweep-out command, and the PM concentration are illustrated in this order from the top. A period from T1 to T2 is determined in the same way as the period from T1 to T2 in FIG. 5. A period from T2 to T11 is determined in the same way as the period from T2 to T3 in FIG. 5.

However, at time T11 when the second control is ended, the exhaust gas temperature is higher than the exhaust gas allowable temperature. Accordingly, the third control is not started at T11. Then, the temperature of the addition valve 42 and the exhaust gas temperature are lowered due to radiation of heat to the atmosphere. Then, at the time expressed by T12 when the exhaust gas temperature becomes less than the exhaust gas allowable temperature, the third control is started. That is, the suck-back command is turned ON at time T12. Time T3, which is the time when the third control is ended, is determined in the same way as in the case of time T2 that is when the first control is ended. After the end of the third control at time expressed by T13, the exhaust gas temperature and the temperature of the addition valve 42 are sufficiently low, so that formation of the deposits and increase in the particle size of the deposits are suppressed.

Although the particle size of the deposits is also influenced by the PM concentration, the influence of the PM concentration is regarded to be ignorable in determination of the time of starting the third control, since the time long enough for the PM concentration to become lower than the allowable concentration is considered to elapse by the time of starting the third control. Even when the PM concentration is less than the allowable concentration, there is a possibility that clogging or wear of the addition valve 42 may occur since deposits are formed from urea water when the temperature of the addition valve 42 or the exhaust gas temperature is high. Therefore, even when the PM concentration is less than the allowable concentration, the third control is not started until the exhaust gas temperature becomes less than the exhaust gas allowable temperature.

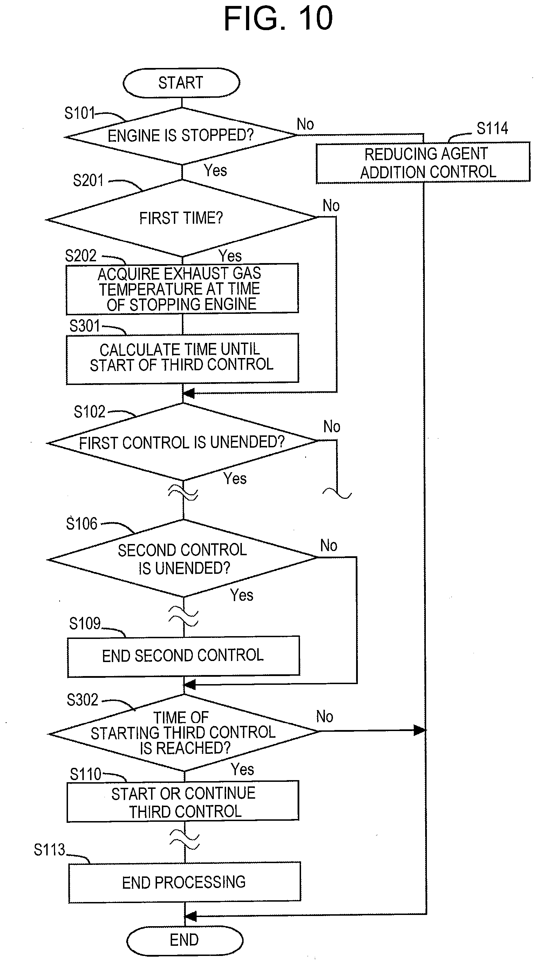

FIG. 10 is a flowchart illustrating flows of the first control, the second control, and the third control according to the present embodiment. The flowchart is executed by the ECU 10 at each specified time. The steps that perform the same processing as in the flowchart described before are designated by the same reference signs to omit a description thereof. Some of the steps that perform the same processing as in the flowchart described before are omitted in the drawing. In the present embodiment, the ECU 10 functions as a control device by performing the processing in the flowchart illustrated in FIG. 10.

In the flowchart illustrated in FIG. 10, the processing before step S301 is identical to the -processing described before, and therefore a description thereof is omitted. In the flowchart illustrated in FIG. 10, when processing of step S202 is ended, the processing proceeds to step S301. In step S301, a period of time from the time of stopping the internal combustion engine 1 to the time of starting the third control is calculated. The ECU 10 stores relation among the exhaust gas temperature at the time of stopping the internal combustion engine 1, the temperature of the urea water, and a period of time from the time of stopping the internal combustion engine 1 to the time of starting the third control. Based on the exhaust gas temperature acquired in step S202, a period of time from the time of stopping the internal combustion engine 1 to the time of starting the third control is obtained. Once the processing of step S301 is ended, the processing proceeds to step S102. The processing from step S102 to step S109 is the same as in the flowchart illustrated in FIG. 6.

In the flowchart illustrated in FIG. 10, when the processing of step S109 is ended, or when negative determination is made in step S106, the processing proceeds to step S302. In step S302, it is determined whether or not elapsed time from the time of stopping the internal combustion engine 1 reaches, a period of time from the time of stopping the internal combustion engine 1 to the time of starting the third control calculated in step S301. The elapsed time from the time of stopping the internal combustion engine 1 is counted by the ECU 10. In step S302, it is determined whether or not, on the assumption that the suck-back control is started, the particle size of the deposits becomes less than the limit particle size. When positive determination is made in step S302, the processing proceeds to step S110, whereas when negative determination is made, the flowchart is tentatively ended. The processing from step S110 to step S113 is the same as in the flowchart illustrated in FIG. 6. Thus, the third control is not started until the exhaust gas temperature is lowered to a temperature (i.e., an exhaust gas allowable temperature) at which the particle size of the deposits does not become the limit particle size or larger when the third control is assumed to be started. This makes it possible to prevent the particle size of the deposits from becoming the limit particle size or larger after the third control is executed. Accordingly, clogging or wear of the addition valve 42 can be suppressed.

In the present embodiment, the time of starting the third control can be determined at the time of stopping the internal combustion engine 1. However, since a certain amount of time is taken until the third control is started after the internal combustion engine 1 is stopped, the estimated exhaust gas temperature may include an error. Therefore, the time of starting the third control may be determined not at the time when the internal combustion engine 1 is stopped, but by detecting an actual exhaust gas temperature after the end of the second control. For example, the time when the exhaust gas temperature, which is detected by the temperature sensor 11 after the end of the second control, becomes less than the exhaust gas allowable temperature may be defined as the time of starting the third control. The exhaust gas temperature or the temperature of the addition valve 42 may be estimated not only by the estimation method described above but also by other estimation methods. Furthermore, a longest time until the exhaust gas temperature is lowered to less than the exhaust gas allowable temperature after the time of ending the second control may be obtained by an experiment or a simulation in advance, and when the longest time elapses from the time of ending the second control, the third control may be started assuming that the exhaust gas temperature becomes less than the exhaust gas allowable temperature.

In the present embodiment, the time to start the third control is determined based on the exhaust gas temperature. However, instead of the exhaust gas temperature, the temperature of the addition valve 42 after the end of the second control may be estimated, and the third control may be started at the point of time when the temperature of the addition valve 42 is lowered to less than the valve allowable temperature. Moreover, for example, the temperature of the addition valve 42 may be determined to be less than the valve allowable temperature when preset time elapses after the exhaust gas temperature becomes less than the exhaust gas allowable temperature, and the third control may be started at this point of time. Moreover, transition of the exhaust gas temperature and transition of the temperature of the addition valve 42 may be estimated based on the exhaust gas temperature at the time of stopping the internal combustion engine 1, and when the exhaust gas temperature becomes less than the exhaust gas allowable temperature and the temperature of the addition valve 42 becomes less than the addition valve allowable temperature, the third control may be started.

<Fourth Embodiment> In the third embodiment, the third control is not started until the exhaust gas temperature is lowered to less than the exhaust gas allowable temperature after the end of the second control. In the present embodiment, the second control is continued until the exhaust gas temperature becomes less than the exhaust gas allowable temperature, and the third control is started at the time of ending the second control.

Here, when the second control is executed, the urea water takes heat away from the addition valve 42 so that the temperature of the addition valve 42 is lowered. The temperature of the exhaust gas is also lowered when the urea water is injected from the addition valve 42 to the exhaust passage 2. When the exhaust gas temperature at the time of ending the second control is lower than the exhaust gas allowable temperature, the third control can be started at the same time when the second control is ended. Accordingly, standby time of the ECU 10 can be shortened, so that power consumption can be reduced.

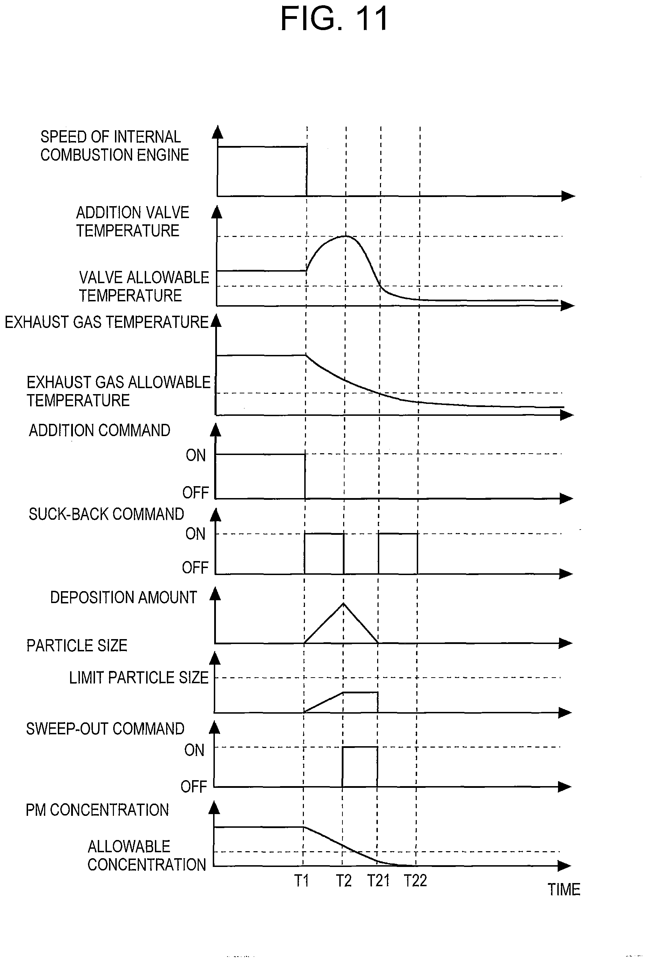

FIG. 11 is a timechart in the case of executing the first control, the second control, and the third control according to the present embodiment. In FIG. 11, the speed of the internal combustion engine 1, the temperature of the addition valve 42, the exhaust gas temperature, the addition command, the suck-back command, the deposition amount, the particle size of deposits, the sweep-out command, and the PM concentration are illustrated in this order from the top. A period from T1 to T2 is determined in the same way as the period from T1 to T2 in FIG. 5.

After T2, the urea water is supplied to the addition valve 42. Since the urea water takes heat away from the addition valve 42, the temperature of the addition valve 42 is swiftly lowered. The urea water is also injected into the exhaust passage 2, so that the exhaust gas temperature is also swiftly lowered. Then at the time represented by T21, the exhaust gas temperature becomes less than an exhaust gas allowable temperature. Thus, when the exhaust gas temperature reaches the exhaust gas allowable temperature, the ECU 10 ends the second control. That is, the second control is ended, when discharge of the deposits is completed and the exhaust gas temperature is sufficiently lowered. Then, the third control is started at the same time when the second control is ended at T21. Since the exhaust gas temperature is lowered to the exhaust gas allowable temperature at T21, increase in the particle size of the deposits is suppressed even with the third control being executed thereafter. At this moment, time long enough to decrease the PM concentration has elapsed since the time of stopping the internal combustion engine 1, and therefore the PM concentration is also less than the allowable concentration. Therefore, the third control is started at T21. Then, the third control is ended at time expressed by T22. Time T22 is determined in the same way as time T2 when the first control is ended. After the third control is ended at the time expressed by T22, formation of the deposits and increase in the particle size of the deposits are suppressed.

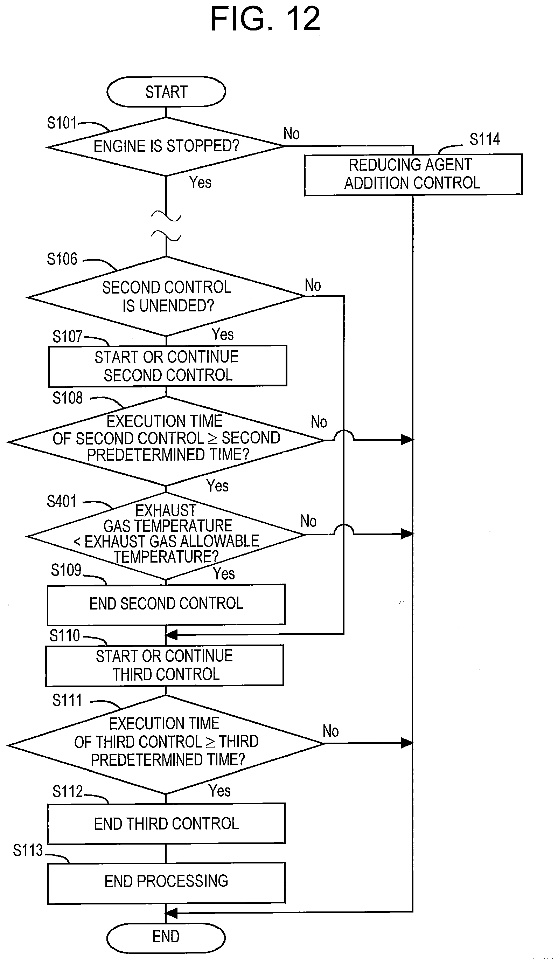

FIG. 12 is a flowchart illustrating flows of the first control, the second control, and the third control according to the present embodiment. The flowchart is performed by the ECU 10 at each specified time. The steps that perform the same processing as in the flowchart described before are designated by the same reference signs to omit a description thereof. Some of the steps that perform the same processing as in the flowchart described before are omitted in the drawing. In the present embodiment, the ECU 10 functions as a control device by performing the processing in the flowchart illustrated in FIG. 12.

In the flowchart illustrated in FIG. 12, the processing from step S101 to step S108 is the same as in the flowchart illustrated in FIG. 6. In the flowchart illustrated in FIG. 12, when positive determination is made in step S108, the processing proceeds to step S401. In step S401, it is determined whether or not the exhaust gas temperature is less than the exhaust gas allowable temperature. In this case, the exhaust gas temperature may be replaced with the temperature of the addition valve 42, and it may be determined whether or not the temperature of the addition valve 42 is less than the valve allowable temperature. Since the temperature of the addition valve 42 is related to the exhaust gas temperature, determination is made based only on the exhaust gas temperature in step S401. During execution of the second control, the exhaust gas temperature may be detected by the temperature sensor 11, and whether or not the exhaust gas temperature is less than the exhaust gas allowable temperature may be determined. However, since the exhaust gas temperature during execution of the second control can be estimated from the exhaust gas temperature at the time of stopping the internal combustion engine 1 and the temperature of the urea water, a point of time when the exhaust gas temperature becomes less than the exhaust gas allowable temperature may be obtained from the exhaust gas temperature at the time of stopping the internal combustion engine 1 and the temperature of the urea water. That is, the time of ending the second control can be obtained at the time when the internal combustion engine 1 is stopped. It may be determined in step S401 whether or not the thus-obtained time of ending the second control has passed. When positive determination is made in step S401, the processing proceeds to step S109, whereas when negative determination is made, the flowchart is tentatively ended. The exhaust gas allowable temperature in the present embodiment corresponds to the allowable temperature in the present invention.

As described in the foregoing, according to the present embodiment, the third control can swiftly be started by swiftly lowering the exhaust gas temperature. Accordingly, a period from the stop of the internal combustion engine 1 to the completion of the third control can be shortened. This saves standby electric power that the ECU 10 consumes while waiting for the start of the third control after the end of the second control, so that power consumption can be reduced.

<Fifth Embodiment> In the above embodiment, the ECU 10 controls the pump 44 and the addition valve 42 so as to return all the urea water in the addition valve 42 and the urea water passage 43 to the tank 41 in the first control. In the present embodiment, the ECU 10 controls the pump 44 and the addition valve 42 so as to return some of the urea water in the addition valve 42 and the urea water passage 43 to the tank 41 in the first control. In the third control according to the present embodiment, the ECU 10 controls the pump 44 and the addition valve 42 so as to return all the urea water in the addition valve 42 and the urea water passage 43 to the tank 41 as in the case of the above embodiment.

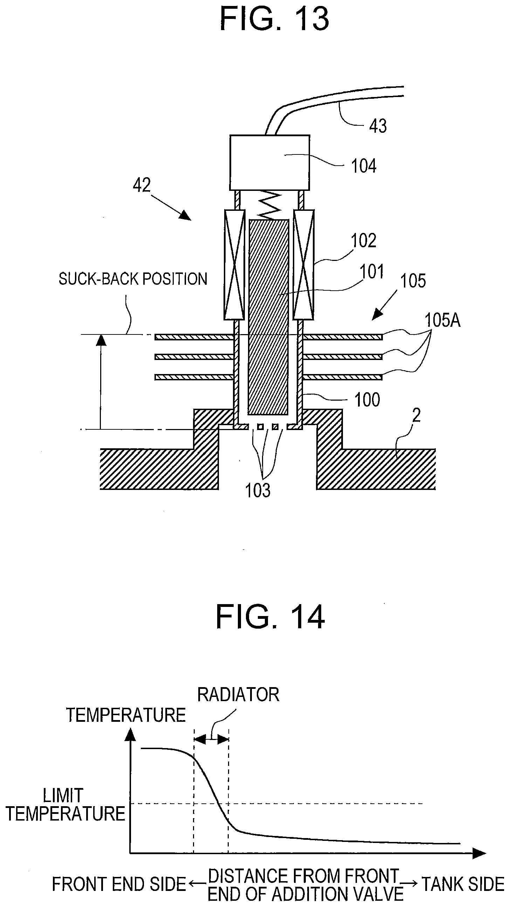

Here, FIG. 13 is a sectional view of the addition valve 42 and the exhaust passage 2 around the addition valve 42 according to the present embodiment. The addition valve 42 includes a main body 100, and the main body 100 includes a needle 101 inside the main body 100. The needle 101 is driven by an electromagnetic drive mechanism 102. The electromagnetic drive mechanism 102 is connected with the ECU 10 through an electric line. The electromagnetic drive mechanism 102 is controlled by the ECU 10. At a front end of the main body 100, a nozzle hole 103 is formed to open into the exhaust passage 2. The nozzle hole 103 is opened and closed by the needle 101. At a rear end of the main body 100, a joint portion 104 to be connected to the urea water passage 43 is provided. The urea water flowing from the joint portion 104 circulates inside the main body 100 around the needle 101 and reaches the nozzle hole 103. During the suck-back control, exhaust gas flows into the main body 100 through the nozzle hole 103. On an outer periphery of the main body 100, a radiator 105 is provided to radiate heat from the addition valve 42 to the atmosphere. The radiator 105 is constituted of a plurality of radiation fins 105A each made of a sheet metal formed into a round shape. The radiation fins 105A are disposed at equal intervals with each surface of the radiation fins 105A being orthogonal to a central axis of the main body 100. Accordingly, the urea water circulating inside the addition valve 42 passes the radiator 105. Although the radiator 105 illustrated in FIG. 13 is constituted of air-cooled radiation fins, water-cooled radiation fins may be used instead of the air-cooled radiation fins. The urea water passage 43 has higher resistance against corrosion by ammonia than the addition valve 42. Although the radiator 105 is provided in the addition valve 42 in the present embodiment, the radiator 105 may be provided in the urea water passage 43 instead. Furthermore, the radiator 105 may be provided not integrally with the addition valve 42 or the urea water passage 43, but may separately be provided.

Here, if the suck-back control is executed immediately after the stop of the internal combustion engine 1, the PM concentration in the addition valve 42 goes up and the temperature of the addition valve 42 become higher. As a consequence, as described in FIGS. 2 and 3, the particle size of the deposits increases inside the addition valve 42. Thus, when the particle size of the deposits increases, clogging of the addition valve 42 or wear of the members in the addition valve 42 may occur. If the suck-back control is not executed immediately after the stop of the internal combustion engine 1, the urea water is hydrolyzed to generate ammonia inside the addition valve 42, which may cause corrosion of the addition valve 42. Furthermore, a large amount of deposits caused by the urea water may be formed.

Accordingly, in the present embodiment, a minimum amount of urea water that can suppress generation of ammonia and increase in the particle size of the deposits is sucked back in the first control. That is, in the present embodiment, the urea water is sucked back to an end portion of the radiator 105 on the tank 41 side ("suck-back position" in FIG. 13). Here, a front end of the addition valve 42, i.e., a peripheral portion of the nozzle hole 103, receives heat from the exhaust gas in the exhaust passage 2 and from the exhaust passage 2. Accordingly, the temperature of the front end of the addition valve 42 increases immediately after the stop of the internal combustion engine 1. The heat moves through the main body 100 and to the addition valve 42 on the tank 41 side, i.e., a rear end side of the addition valve 42. However, since the radiator 105 exists on the way, the heat transferred from the front end portion of the addition valve 42 goes to the radiator 105. Since the heat is radiated to the atmosphere in the radiator 105, the heat is hardly transferred to a portion of the addition valve 42 on the more tank 41 side than the radiator 105. Accordingly, in a portion of on the more exhaust passage 2 side than the radiator 105 and in the radiator 105, the temperature of the addition valve 42 becomes high. As compared with the high temperature, the temperature of the addition valve 42 on the more tank 41 side than the radiator 105 is low.

Here, FIG. 14 illustrates relation between distance from the front end of the addition valve 42 and temperature. Thus, while a portion extending from the front end of the addition valve 42 to the radiator 105 has a relatively high temperature, a portion of the addition valve 42 on the more tank 41 side than the radiator 105 has a low temperature. The portion of the addition valve 42 on the more tank 41 side than a tank 41-side end portion of the radiator 105 has a temperature lower than the limit temperature.

Therefore, at the time of executing the first control, the urea water is sucked back at least to the portion of the addition valve 42 on the more tank 41 side than the radiator 105, so that formation of the deposits and generation of ammonia inside the addition valve 42 can be suppressed. Since the amount of exhaust gas sucked from the exhaust passage 2 to the addition valve 42 during the first control can be limited, the amount of PM sucked into the addition valve 42 can also be reduced. Accordingly, even when the deposits are formed, increase in the particle size of the deposits can be suppressed. In the present embodiment, the ECU 10 functions as a control device in the present invention by operating the pump 44 to suck back the urea water up to the end portion of the radiator 105 on the tank 41 side ("suck-back position" in FIG. 13). In the present embodiment, the amount of sucked-back urea water when the urea water is sucked back to the "suck-back position" of FIG. 13 corresponds to the specified amount in the present invention. The amount of the sucked-back urea water is equal to the capacity of a portion extending from the front end of the addition valve 42 to the end portion of the radiator 105 on the tank 41 side.

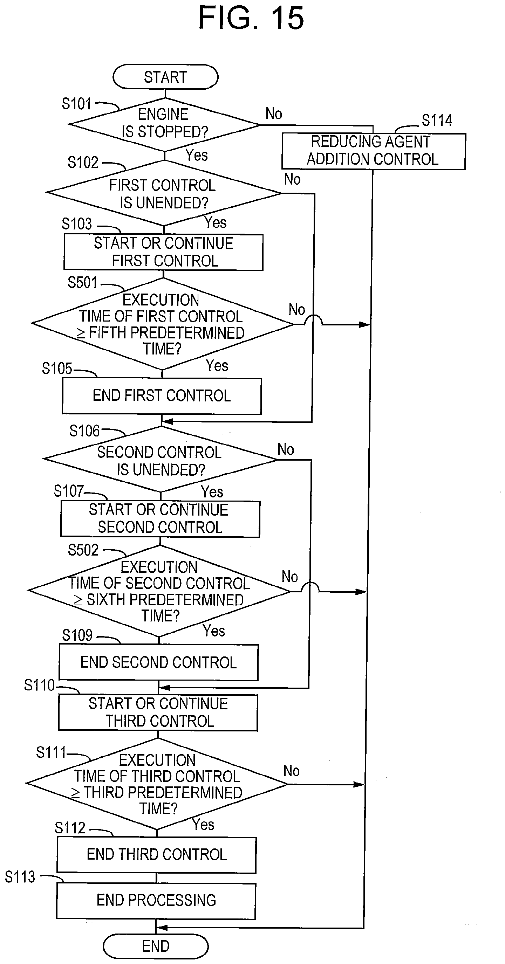

FIG. 15 is a flowchart illustrating flows of the first control, the second control, and the third control according to the present embodiment. The flowchart is performed by the ECU 10 at each specified time. The steps that perform the same processing as in the flowchart described before are designated by the same reference signs to omit a description thereof.

In the flowchart illustrated in FIG. 15, when step S103 is ended, the processing proceeds to step S501. In step S501, the ECU 10 determines whether or not the execution time of the first control is equal to or more than fifth predetermined time. The execution time of the first control is counted by the ECU 10. The fifth predetermined time is obtained in advance by an experiment or a simulation as the time taken to suck the urea water in the addition valve 42 back to the end portion of the radiator 105 on the tank 41 side, and is stored in the ECU 10. In step S501, the ECU 10 determines whether or not sucking-back of the urea water up to the suck-back position illustrated in FIG. 13 is completed. The fifth predetermined time is a period of time until the amount of the urea water returned to the tank 41 becomes an amount (i.e., specified amount) corresponding to the amount of urea water stored in a portion extending from the front end of the addition valve 42 to the end portion of the radiator 105 on the tank 41 side (i.e., the capacity of the portion extending from the front end of the addition valve 42 to the end portion of the radiator 105 on the tank 41 side). That is, it can be said that in step S501, the ECU 10 determines whether or not the amount of urea water returned to the tank 41 reaches the specified amount. When positive determination is made in step S501, the processing proceeds to step S105, whereas when negative determination is made, the flowchart is tentatively ended.

In the flowchart illustrated in FIG. 15, when step S107 is ended, the processing proceeds to step S502. In step S502, the ECU 10 determines whether or not the execution time of the second control is equal to or more than sixth predetermined time. The execution time of the second control is counted by the ECU 10. The sixth predetermined time herein is obtained in advance by an experiment or a simulation as the time taken to fill the addition valve 42 and the urea water passage 43 with the urea water, and is stored in the ECU 10. It can be said that the sixth predetermined time is the time until the amount of urea water discharged from the tank 41 becomes an amount (i.e., specified amount) corresponding to the capacity of the portion extending from the front end of the addition valve 42 to the end portion of the radiator 105 on the tank 41 side. That is, it can be said that in step S502, the ECU 10 determines whether or not the amount of urea water discharged from the tank 41 becomes the specified amount or larger. The sixth predetermined time in step S502 may be the same as or different from the fifth predetermined time in step S501. When the sixth predetermined time is set to be equal to or more than the fifth predetermined time, the urea water is injected from the addition valve 42 to the exhaust passage 2, so that the deposits can more reliably be discharged. It can be said that in step S502, the ECU 10 determines whether or not discharge of the deposits from the addition valve 42 is completed. When positive determination is made in step S502, the processing proceeds to step S109, whereas when negative determination is made, the flowchart is tentatively ended.

As described in the foregoing, according to the present embodiment, a minimum necessary amount of the urea water is sucked back to the tank 41 such that a high-temperature region in the addition valve 42 is not filled with the urea water. This makes it possible to suppress generation of ammonia and formation of the deposits. Since the suction amount of PM into the addition valve 42 decreases, increase in the particle size of deposits, if the deposits should be formed, can be suppressed.

In the present embodiment, the urea water is sucked back to the end portion of the radiator 105 on the tank 41 side in the first control. However, the urea water may be sucked back to a portion of the addition valve 42 on the more tank 41 side than the tank 41-side end portion of the radiator 105 instead. For example, in the first control, the urea water may be sucked back to an end portion of the joint portion 104 on the tank 41 side, i.e., a rear end portion of the addition valve 42. Here, when ammonia is generated inside the addition valve 42, corrosion may occur inside the addition valve 42. As a solution, the urea water is sucked back to the rear end portion of the addition valve 42, so that generation of ammonia can be suppressed. As a result, corrosion inside the addition valve 42 can be suppressed. In this case, the amount of sucked-back urea water to the tank 41 when the urea water is sucked back to the rear end portion of the addition valve 42, i.e., the capacity of the addition valve 42, corresponds to the specified amount in the present invention. Even if ammonia should be generated inside the urea water passage 43, occurrence of corrosion inside the urea water passage 43 is suppressed since the urea water passage 43 has a higher resistance against corrosion by ammonia than the addition valve 42. The suck-back position in the first control is not limited to the end portion of the radiator 105 on the tank 41 side, but may be the portion of the addition valve 42 on the more tank 41 side than the tank 41-side end portion of the radiator 105. Although the radiator 105 is provided in the addition valve 42 in the present embodiment, the radiator 105 may be provided in the urea water passage 43 instead. In this case, in the first control, urea water may be sucked back to the end portion of the radiator 105 on the tank 41 side.

In the present embodiment, the ECU 10 may determine the execution time of the first control based on the exhaust gas temperature at the time of stopping the internal combustion engine 1. That is, the execution time of the first control may be set to the fifth predetermined time when the particle size of the deposits is predicted to become the limit particle size or larger if the execution time of the first control is set to be equal to or more than the first predetermined time described in the first embodiment. When the particle size of the deposits is predicted to become less than the limit particle size, the execution time of the first control may be set to the first predetermined time. Since the particle size of the deposits at the time of ending the first control is correlated with the temperature of the exhaust gas at the time of stopping the internal combustion engine 1, the execution time of the first control can be determined based on the temperature of the exhaust gas at the time of stopping the internal combustion engine 1. Relation between the execution time of the first control and the exhaust gas temperature at the time of stopping the internal combustion engine 1 may be obtained in advance by an experiment or a simulation, and may be stored in the ECU 10.

<Sixth Embodiment> In the above embodiment, the second control is started concurrently with the end of the first control. In the first embodiment and the second embodiment, the third control is started concurrently with the end of the second control. However, it is not necessary to start the second control concurrently with the end of the first control and to start the third control concurrently with the end of the second control. If the second control is executed in order to discharge the deposits from the addition valve 42 to the exhaust passage 2, the second control may be started at least when the particle size of the deposits is less than the limit particle size. Accordingly, in the present embodiment, the second control is started at the time that is after the time of ending the first control and that is when the particle size of the deposits is estimated to be less than the limit particle size. In this case, the second control may be started immediately before the time when the particle size of the deposits is estimated to reach the limit particle size.

Here, as the exhaust gas temperature at the time of stopping the internal combustion engine 1 is higher, the exhaust gas temperature after the end of the first control is higher. As illustrated in FIG. 7, as the exhaust gas temperature is higher, the particle size of the deposits becomes larger. Accordingly, as the exhaust gas temperature at the time of stopping the internal combustion engine 1 is higher, the particle size of the deposits after the end of the first control becomes larger. Therefore, a period until the particle size of the deposits reaches the limit particle size after the first control is ended becomes shorter as the exhaust gas temperature at the time of stopping the internal combustion engine 1 is higher. Thus, the exhaust gas temperature at the time of stopping the internal combustion engine 1 is correlated with the period until the particle size of the deposits reaches the limit particle size after the first control is ended. Accordingly, in the present embodiment, as the exhaust gas temperature at the time of stopping the internal combustion engine 1 is higher, the period from the time of ending the first control to the time of starting the second control is made shorter. Relation between the exhaust gas temperature at the time of stopping the internal combustion engine 1 and the period from the time of ending the first control to the time of starting the second control is obtained in advance by an experiment or a simulation, and the obtained relation is stored in the ECU 10.

Moreover, if the third control is executed when the temperature of the addition valve 42 or the exhaust gas temperature is still high, reformation of deposits may occur when the exhaust gas is sucked into the addition valve 42, and the particle size of the deposits may become the limit particle size or larger. Accordingly, in the present embodiment, the third control is started at the time when the particle size of the deposits is predicted to be less than the limit particle size even with the third control being executed.

More specifically, in order to prevent the particle size of the deposits from becoming the limit particle size or larger, the temperature of the addition valve 42 at the time of starting the third control and the exhaust gas temperature at the time of starting the third control need to be sufficiently low. Accordingly, in the present embodiment, the third control is started at the time when the particle size of the deposits is predicted to be less than the limit particle size even with the third control being executed. Since the temperature of the addition valve 42 is correlated with the exhaust gas temperature, the exhaust gas temperature may also be used as a basis of determining whether the temperature of the addition valve 42 is sufficiently lowered.

Here, as the exhaust gas temperature at the time of stopping the internal combustion engine 1 is higher, the time until the exhaust gas temperature is sufficiently lowered becomes longer. Therefore, when the particle size of the deposits is made to become less than the limit particle size even with the third control being executed, a period from the time of ending the second control to the time of starting the third control becomes longer as the exhaust gas temperature at the time of stopping the internal combustion engine 1 is higher. Accordingly, in the present embodiment, as the exhaust gas temperature at the time of stopping the internal combustion engine 1 is higher, the period from the time of ending the second control to the time of starting the third control is made longer. Relation between the exhaust gas temperature at the time of stopping the internal combustion engine 1 and the period from the time of ending the second control to the time of starting the third control is obtained in advance by an experiment or a simulation, and the obtained relation is stored in the ECU 10.

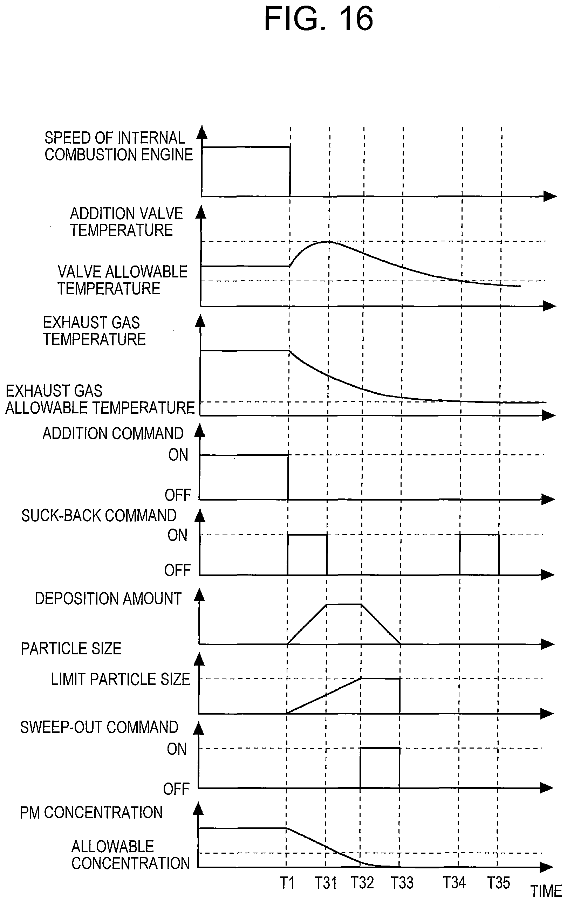

FIG. 16 is a timechart in the case of executing the first control, the second control, and the third control according to the present embodiment. In FIG. 1-6, the speed of the internal combustion engine 1, the temperature of the addition valve 42, the exhaust gas temperature, the addition command, the suck-back command, the deposition amount, the particle size of deposits, the sweep-out command, and the PM concentration are illustrated in this order from the top. A period from T1 to T31 is determined in the same way as the period from T1 to T2 in FIG. 5. A period from T31 to T32 is determined based on the period until the particle size of the deposits reaches the limit particle size. The period from T31 to T32 becomes shorter as the exhaust gas temperature at time T1 is higher. Here, even when increase in temperature of the addition valve 42 ends at T31, the particle size of the deposits increases thereafter if the particle size of the deposits is not converged. Therefore, the particle size of the deposits can increase in the period from T31 to T32. Time T32 is set as a point of time immediately before the particle size of the deposits exceeds the limit particle size. At T32, the sweep-out command is turned ON and the second control is started. As a result, the amount of deposits decreases and increase in the particle size of the deposits is also suppressed. The period from T32 to T33 is determined in the same way as the period from T2 to T3 in FIG. 5.

At time T33 when the second control is ended, the exhaust gas temperature is higher than the exhaust gas allowable temperature. Then, the exhaust gas temperature is lowered due to radiation of heat to the atmosphere. Time T34 is the time when the suck-back command is turned ON and is also the time when the third control is started. A period from T33 to T34 becomes longer, as the exhaust gas temperature at time T1 is higher. Since the exhaust gas temperature becomes less than the exhaust gas allowable temperature at T34, increase in the particle size of the deposits is suppressed even with the third control being started. Time T35, which is the time when the third control is ended, is determined in the same way as in the case of time T31 that is when the first control is ended.

Since the particle size of the deposits is also influenced by the PM concentration, correction based on the PM concentration may be performed when the time of starting the second control and the time of starting the third control are determined. That is, since the particle size of the deposits tends to increase with higher PM, concentration, the period from the time of ending the first control to the time of starting the second control may be shortened, and the period from the time of ending the second control to the time of starting the third control may be lengthened.

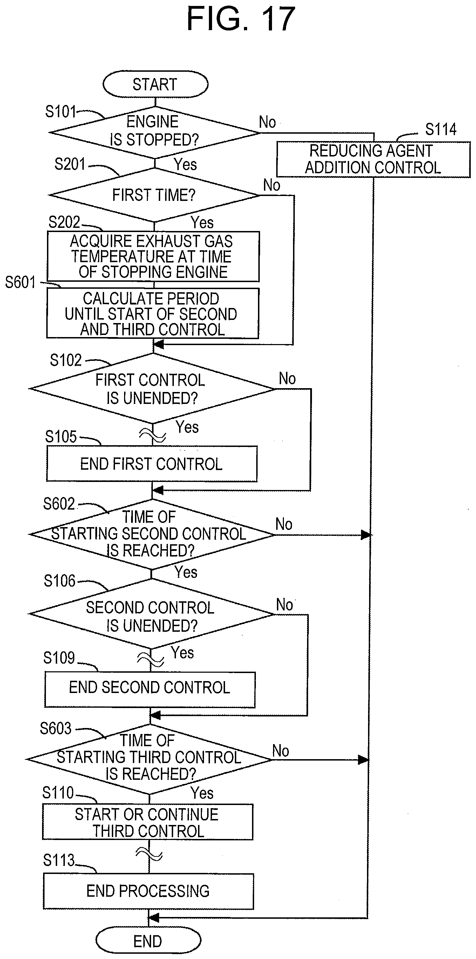

FIG. 17 is a flowchart illustrating flows of the first control, the second control, and the third control according to the present embodiment. The flowchart is performed by the ECU 10 at each specified time. The steps that perform the same processing as in the flowchart described before are designated by the same reference signs to omit a description thereof. Some of the steps that perform the same processing as in the flowchart described before are omitted in the drawing. In the present embodiment, the ECU 10 functions as a control device by performing the processing in the flowchart illustrated in FIG. 17.

In the flowchart illustrated in FIG. 17, when processing of step S202 is ended, the processing proceeds to step S601. In step S601, a period from the time of ending the first control to the time of starting the second control, and a period from the time of ending the second control to the time of starting the third control are calculated. The periods are obtained based on the exhaust gas temperature at the time of stopping the engine acquired in step S202. Here, as the exhaust gas temperature at the time of stopping the internal combustion engine 1 is higher, the period from the time of ending the first control to the time of starting the second control becomes shorter. Moreover, as the exhaust gas temperature at the time of stopping the internal combustion engine 1 is higher, the period from the time of ending the second control to the time of starting the third control becomes longer. Such relation is obtained in advance by an experiment or a simulation, and is stored in the ECU 10. Once the processing of step S601 is ended, the processing proceeds to step S102. The processing from step S102 to step S105 is the same as in the flowchart illustrated in FIG. 6.

In the flowchart illustrated in FIG. 17, when the processing of step S105 is ended, or when negative determination is made in step S102, the processing proceeds to step S602. In step S602, it is determined whether or not the time of starting the second control is reached. In step S602, it is determined whether or not the period elapsed from the time of ending the first control reaches the period from the time of ending the first control to the time of starting the second control calculated in step S601. The period from the time of ending the first control is counted by the ECU 10. When positive determination is made in step S602, the processing proceeds to step S106, whereas when negative determination is made, the flowchart is tentatively ended. The processing in step S106 to step S109 is the same as in the flowchart illustrated in FIG. 6.

In the flowchart illustrated in FIG. 17, when the processing of step S109 is ended, or when negative determination is made in step S106, the processing proceeds to step S603. In step S603, it is determined whether or not the time of starting the third control is reached. In step S603, it is determined whether or not a period from the time of ending the second control reaches a period from the time of ending the second control to the time of starting the third control calculated in step S601. The period from the time of ending the second control is counted by the ECU 10. When positive determination is made in step S603, the processing proceeds to step S101, whereas when negative determination is made, the flowchart is tentatively ended. The processing from step S110 to step S113 is the same as in the flowchart illustrated in FIG. 6.

As described in the foregoing, according to the present embodiment, as the exhaust gas temperature is higher at the time of stopping the internal combustion engine 1, the period from the time of ending the first control to the time of starting the second control is made shorter, so that the particle size of the deposits can be prevented from becoming the limit particle size or larger. Moreover, a sufficient time is taken between the time of ending the first control and the time of starting the second control such that the exhaust gas temperature is lowered during the time. As a result, even when the second control is executed thereafter, generation of ammonia can be suppressed. Moreover, as the exhaust gas temperature at the time of stopping the internal combustion engine 1 is higher, the period from the time of ending the second control to the time of starting the third control is made longer. As a result, the exhaust gas temperature is lowered at the time of ending the third control, which makes it possible to prevent the particle size of the deposits from becoming the limit particle size or larger after the end of the third control. Therefore, wear of the addition valve 42 can be suppressed, or occurrence of clogging in the addition valve 42 can be suppressed.

## Claims

1. An exhaust gas control apparatus for an internal combustion engine, the exhaust gas control apparatus comprising:
an addition valve (42) configured to add urea water to an exhaust passage of the internal combustion engine;
a tank (41) configured to store the urea water;
a urea water passage (43) that connects the addition valve (42) and the tank (41) so as to circulate the urea water;
a pump (44) configured to circulate the urea water to the urea water passage (43);
a selective reduction-type nitrogen oxides catalyst (31) disposed in a portion of the exhaust passage on a downstream side of the addition valve (42), the selective reduction-type nitrogen oxides catalyst (31) being configured to purify nitrogen oxides in the exhaust passage using the urea water; and
an electronic control unit (10) configured to, after the internal combustion engine is stopped:
(i) control the pump (44), as a first control, such that a specified amount of the urea water stored in the addition valve (42) and the urea water passage (43) is returned to the tank (41);
(ii) control the pump (44), as a second control, such that the specified amount or more of the urea water in the tank (41) is discharged from the tank (41) to the urea water passage (43) after the first control is executed; and
(iii) control the pump (44), as a third control, such that all the urea water stored in the addition valve (42) and the urea water passage (43) is returned to the tank (41) after the second control is executed; whereby the addition valve (42) is open during each of the first, second and third control.

2. The exhaust gas control apparatus according to claim 1, wherein the specified amount in the first control is smaller than a capacity of the addition valve (42) and the urea water passage (43).

3. The exhaust gas control apparatus according to claim 1 or 2, wherein:
the addition valve (42) or the urea water passage (43) includes a radiator configured to radiate heat from the addition valve (42) or the urea water passage (43); and
the specified amount in the first control is equal to or more than a capacity of a portion extending from a front end of the addition valve (42) to an end portion of the radiator on a tank side.

4. The exhaust gas control apparatus according to claim 1 or 2, wherein:
the urea water passage (43) is higher in resistance against corrosion by ammonia than the addition valve (42); and
the specified amount in the first control is the capacity of the addition valve (42).

5. The exhaust gas control apparatus according to any one of claims 1 to 4, wherein:
the electronic control unit (10) is configured to execute the first control, the second control, and the third control when a temperature of exhaust gas at a time of stopping the internal combustion engine is equal to or more than a predetermined temperature; and
the electronic control unit (10) is configured to control the pump (44), as fourth control, such that all the urea water stored in the addition valve (42) and the urea water passage (43) returns to the tank (41) without executing the first control, the second control, and the third control, when the temperature of the exhaust gas at the time of stopping the internal combustion engine is less than the predetermined temperature.

6. The exhaust gas control apparatus according to any one of claims 1 to 5, wherein the electronic control unit (10) is configured to make a period from time of ending the first control to time of starting the second control shorter and make a period from time of ending the second control to time of starting the third control longer as the temperature of the exhaust gas at the time of stopping the internal combustion engine is higher.

7. The exhaust gas control apparatus according to any one of claims 1 to 5, wherein the electronic control unit (10) is configured to control the pump (44), as the second control, such that the specified amount or more of the urea water in the tank (41) is discharged to the urea water passage (43) and that the temperature of the exhaust gas becomes lower than an allowable temperature.

## Patentansprüche

1. Abgassteuerungsvorrichtung für einen Verbrennungsmotor, wobei die Abgassteuerungsvorrichtung Folgendes umfasst:
ein Zugabeventil (42), das konfiguriert ist, Harnstoffwasser zu einem Abgaskanal des Verbrennungsmotors hinzuzufügen;
einen Tank (41), der konfiguriert ist, das Harnstoffwasser zu Speichern;
einen Harnstoffwasserkanal (43), der das Zugabeventil (42) und den Tank (41) verbindet, um das Harnstoffwasser zirkulieren zu lassen;
eine Pumpe (44), die konfiguriert ist, das Harnstoffwasser zum Harnstoffwasserkanal (43) zirkulieren zu lassen;
einen selektiven Reduktionstyp-Stickstoffoxid-Katalysator (31), der in einem Abschnitt des Abgaskanals auf einer stromabwärtigen Seite des Zugabeventils (42) angeordnet ist, wobei der selektive Reduktionstyp-Stickstoffoxid-Katalysator (31) konfiguriert ist, Stickstoffoxide im Abgaskanal unter Verwendung von Harnstoffwasser zu reinigen; und
eine elektronische Steuereinheit (10), die zu Folgendem konfiguriert ist, nachdem der Verbrennungsmotor angehalten ist:
(i) als erstes Steuerelement die Pumpe (44) zu steuern, sodass eine bestimmte Menge des Harnstoffwassers, das im Zugabeventil (42) und dem Harnstoffwasserkanal (43) gespeichert ist, zum Tank (41) zurückgeführt wird;
(ii) als zweites Steuerelement die Pumpe (44) zu steuern, sodass die bestimmte Menge oder mehr des Harnstoffwassers im Tank (41) vom Tank (41) in den Harnstoffwasserkanal (43) abgelassen wird, nachdem das erste Steuerelement ausgeführt ist; und
(iii) als drittes Steuerelement die Pumpe (44) zu steuern, sodass alles Harnstoffwasser, das im Zugabeventil (42) und dem Harnstoffwasserkanal (43) gespeichert ist, zum Tank (41) zurückgeführt wird, nachdem das zweite Steuerelement ausgeführt ist;
wobei das Zugabeventil (42) während jedem aus dem ersten, zweiten und dritten Steuerelement geöffnet ist.

2. Abgassteuerungsvorrichtung nach Anspruch 1, wobei die bestimmte Menge im ersten Steuerelement kleiner ist als ein Fassungsvermögen des Zugabeventils (42) und des Harnstoffwasserkanals (43).

3. Abgassteuerungsvorrichtung nach Anspruch 1 oder 2, wobei:
das Zugabeventil (42) oder der Harnstoffwasserkanal (43) einen Radiator umfasst, der konfiguriert ist, Hitze von dem Zugabeventil (42) oder dem Harnstoffwasserkanal (43) auszustrahlen; und
die bestimmte Menge im ersten Steuerelement dem Fassungsvermögen eines Abschnitts, der sich von einem vorderen Ende des Zugabeventils (42) zu einem Endabschnitt des Radiators auf einer Tankseite erstreckt, entspricht oder größer ist.

4. Abgassteuerungsvorrichtung nach Anspruch 1 oder 2, wobei:
der Harnstoffwasserkanal (43) eine höhere Beständigkeit gegen Korrosion durch Ammoniak hat als das Zugabeventil (42); und
die bestimmte Menge im ersten Steuerelement das Fassungsvermögen des Zugabeventils (42) ist.

5. Abgassteuerungsvorrichtung nach einem der Ansprüche 1 bis 4, wobei:
die elektronische Steuereinheit (10) konfiguriert ist, das erste Steuerelement, das zweite Steuerelement und das dritte Steuerelement auszuführen, wenn eine Abgastemperatur zu einer Zeit des Anhaltens des Verbrennungsmotors einer vorbestimmten Temperatur entspricht oder höher ist; und
die elektronische Steuereinheit (10) konfiguriert ist, die Pumpe (44) als viertes Steuerelement zu steuern, sodass alles Harnstoffwasser, das im Zugabeventil (42) und dem Harnstoffwasserkanal (43) gespeichert ist, in den Tank (41) zurückkehrt, ohne das erste Steuerelement, das zweite Steuerelement und das dritte Steuerelement auszuführen, wenn die Temperatur des Abgases zur Zeit des Anhaltens des Verbrennungsmotors geringer ist als die vorbestimmte Temperatur.

6. Abgassteuerungsvorrichtung nach einem der Ansprüche 1 bis 5, wobei die elektronische Steuereinheit (10) konfiguriert ist, eine Dauer von einer Zeit des Endens des ersten Steuerelements zu einer Zeit des Beginnens des zweiten Steuerelements kürzer zu machen und eine Dauer von einer Zeit des Endens des zweiten Steuerelements zu einer Zeit des Startens des dritten Steuerelements länger zu machen, wenn die Temperatur des Abgases zur Zeit des Anhaltens des Verbrennungsmotors höher ist.

7. Abgassteuerungsvorrichtung nach einem der Ansprüche 1 bis 5, wobei die elektronische Steuereinheit (10) konfiguriert ist, die Pumpe (44) als zweites Steuerelement zu steuern, sodass die bestimmte Menge oder mehr des Harnstoffwassers im Tank (41) in den Harnstoffwasserkanal (43) abgelassen wird und dass die Temperatur des Abgases geringer wird als eine zulässige Temperatur.

## Revendications

1. Appareil de commande de gaz d'échappement pour un moteur à combustion interne, l'appareil de commande de gaz d'échappement comprenant :
une soupape d'ajout (42) configurée pour ajouter de l'eau d'urée dans un passage d'échappement du moteur à combustion interne ;
un réservoir (41) configuré pour stocker l'eau d'urée ;
un passage d'eau d'urée (43) qui raccorde la soupape d'ajout (42) et le réservoir (41) afin de faire circuler l'eau d'urée ;
une pompe (44) configurée pour faire circuler l'eau d'urée vers le passage d'eau d'urée (43) ;
un catalyseur d'oxydes d'azote à réduction sélective (31) disposé dans une portion du passage d'échappement sur un côté aval de la soupape d'ajout (42), le catalyseur d'oxydes d'azote à réduction sélective (31) étant configuré pour épurer des oxydes d'azote dans le passage d'échappement en utilisant l'eau d'urée ; et
une unité de commande électronique (10) configurée pour, après que le moteur à combustion interne est arrêté :
(i) commander la pompe (44), en tant que première commande, de telle sorte qu'une quantité spécifiée de l'eau d'urée stockée dans la soupape d'ajout (42) et le passage d'eau d'urée (43) soit renvoyée au réservoir (41) ;
(ii) commander la pompe (44), en tant que deuxième commande, de telle sorte que la quantité spécifiée, ou plus, de l'eau d'urée dans le réservoir (41) soit évacuée, à partir du réservoir (41), dans le passage d'eau d'urée (43) après que la première commande est exécutée ; et
(iii) commander la pompe (44), en tant que troisième commande, de telle sorte que toute l'eau d'urée stockée dans la soupape d'ajout (42) et le passage d'eau d'urée (43) soit retournée au réservoir (41) après que la deuxième commande est exécutée ;
moyennant quoi la soupape d'ajout (42) est ouverte durant chacune des première, deuxième et troisième commandes.

2. Appareil de commande de gaz d'échappement selon la revendication 1, dans lequel la quantité spécifiée dans la première commande est inférieure à une capacité de la soupape d'ajout (42) et du passage d'eau d'urée (43).

3. Appareil de commande de gaz d'échappement selon la revendication 1 ou 2, dans lequel :
la soupape d'ajout (42) ou le passage d'eau d'urée (43) inclut un radiateur configuré pour faire rayonner de la chaleur à partir de la soupape d'ajout (42) ou du passage d'eau d'urée (43) ; et
la quantité spécifiée dans la première commande est égale, ou supérieure, à une capacité d'une portion s'étendant d'une extrémité avant de la soupape d'ajout (42) à une portion d'extrémité du radiateur sur un côté réservoir.

4. Appareil de commande de gaz d'échappement selon la revendication 1 ou 2, dans lequel :
la résistance contre la corrosion par ammoniac du passage d'eau d'urée (43) est supérieure à celle de la soupape d'ajout (42) ; et
la quantité spécifiée dans la première commande est la capacité de la soupape d'ajout (42).

5. Appareil de commande de gaz d'échappement selon l'une quelconque des revendications 1 à 4, dans lequel :
l'unité de commande électronique (10) est configurée pour exécuter la première commande, la deuxième commande, et la troisième commande lorsqu'une température de gaz d'échappement à un instant de l'arrêt du moteur à combustion interne est égale ou supérieure à une température prédéterminée ; et
l'unité de commande électronique (10) est configurée pour commander la pompe (44), en tant que quatrième commande, de telle sorte que toute l'eau d'urée stockée dans la soupape d'ajout (42) et le passage d'eau d'urée (43) retourne au réservoir (41) sans exécuter la première commande, la deuxième commande, et la troisième commande, lorsque la température du gaz d'échappement à l'instant de l'arrêt du moteur à combustion interne est inférieure à la température prédéterminée.

6. Appareil de commande de gaz d'échappement selon l'une quelconque des revendications 1 à 5, dans lequel l'unité de commande électronique (10) est configurée pour raccourcir une période, de l'instant de la fin de la première commande à l'instant du début de la deuxième commande, et rallonger une période, de l'instant de fin de la deuxième commande à l'instant de début de la troisième commande, lorsque la température du gaz d'échappement à l'instant de l'arrêt du moteur à combustion interne est plus élevée.

7. Appareil de commande de gaz d'échappement selon l'une quelconque des revendications 1 à 5, dans lequel l'unité de commande électronique (10) est configurée pour commander la pompe (44), en tant que deuxième commande, de telle sorte que la quantité spécifiée, ou plus, de l'eau d'urée dans le réservoir (41) soit évacuée dans le passage d'eau d'urée (43) et que la température du gaz d'échappement devienne inférieure à une température admissible.
